(19) Europäisches Patentamt / European Patent Office / Office européen des brevets

(11) **EP 4 292 480 A2**

(12) **DEMANDE DE BREVET EUROPEEN**

(43) Date de publication:
20.12.2023  Bulletin 2023/51

(21) Numéro de dépôt: 23177670.9

(22) Date de dépôt: 20.03.2018

(51) Classification Internationale des Brevets (IPC):
**A47F 3/04** (2006.01)

(52) Classification Coopérative des Brevets (CPC):
**A47F 3/0495; B05B 7/0012; B05B 12/004; B05B 12/081; B05B 17/0615; B60H 3/022; F25D 17/042;** B05B 17/0669; F24F 6/12; F25D 2317/04131

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 28.03.2017  FR 1752545
06.03.2018  FR 1851898

(62) Numéro(s) de document de la (des) demande(s) initiale(s) en application de l'article 76 CBE:
**18715896.9 / 3 600 690**

(27) Demande déposée antérieurement:
**20.03.2018 PCT/FR2018/050664**

(71) Demandeur: ARECO FINANCES ET TECHNOLOGIE - ARFITEC
06130 Grasse (FR)

(72) Inventeurs:
• GSCHWIND, Michel
06130 Placassier (FR)
• SABRAOUI, Abbas
71000 Macon (FR)
• RICHARD, Frédéric
06220 Vallauris (FR)

(74) Mandataire: Schmidt, Martin Peter
IXAS Conseil
22 avenue René Cassin
69009 Lyon (FR)

Remarques:
Cette demande a été déposée le 06.06.2023 comme demande divisionnaire de la demande mentionnée sous le code INID 62.

(54) **DISPOSITIF DE NEBULISATION COMPACT, ET ENSEMBLE DE NEBULISATION COMPRENANT UN TEL DISPOSITIF**

(57)  Ce dispositif de nébulisation comprend une cuve (60) de réception de liquide, un élément piézo-électrique (30), une chambre de nébulisation (20) comprenant des moyens de génération dudit brouillard de gouttelettes (J) et au moins un canal (22) de diffusion de brouillard hors dudit dispositif (1), l'air et le jet de gouttelettes s'écoulant en service selon la même direction, depuis les moyens d'arrivée en direction des moyens de diffusion.

Selon l'invention le dispositif comprend au moins une des caractéristiques suivantes :
i. la section (d21) de chaque orifice de diffusion (21) est comprise entre 3 et 15 millimètres,
ii. la hauteur (H23) du conduit de diffusion des gouttes, reliant les moyens d'admission (82) et les canaux de diffusion (22), est comprise entre 4 et 20 millimètres,
iii. le rapport (S82/S21), entre la surface d'admission d'air dans la chambre et la somme des surfaces des différents orifices de diffusion (21), est supérieur à 1,
iv. la longueur (L20) de la chambre de nébulisation (20) est comprise entre 30 et 160 millimètres, alors que la largeur (l20) de la chambre de nébulisation (20) est comprise entre 16 et 60 millimètres.

Fig. 9

**Description**

**Domaine technique de l'invention**

L'invention concerne le domaine technique des dispositifs de nébulisation, encore dénommés dispositifs de pulvérisation, capables de produire un brouillard de micro-gouttelettes à partir d'un liquide. Les gouttelettes sont typiquement générées par un élément piézo-électrique. Au sens de l'invention, les gouttelettes générées par le dispositif de nébulisation présentent une taille inférieure à 50 micromètres, notamment à 5 micromètres.

**Etat de la technique**

On connait de nombreux dispositifs de pulvérisation de micro-gouttelettes d'un liquide sous l'effet d'ultrasons. Les ultrasons sont générés par un élément piézo-électrique. Ces dispositifs utilisent soit une membrane microperforée, soit un élément piézo-électrique équipé ou non d'une buse à concentration. La taille des gouttelettes générées par ces dispositifs est typiquement comprise entre 1 à 10 $\mu$m.

On connaît dans la littérature de nombreux types des dispositifs de pulvérisation utilisant une membrane microperforée: De tels appareils sont décrit par exemple dans les documents WO 2013/110248 (Nebu Tec), WO 2012/020262 et WO 05/15822 (Technology Partnership), EP 2 244 314 (Zobele Holding), US 2006/213503 et US 2005/224076 (Pari Pharma), WO 2001/85240 (Pezzopane), FR 2 929 861 (L'Oréal), US 8 870 090 (Aptar), WO 2008/058941 (Telemaq), JP 2001/300375 (Panasonic). Certains d'entre eux sont très simples et assez compacts, mais en règle générale les dispositifs utilisant une membrane ont un débit très faible, c'est-à-dire ils produisent une quantité de brouillard très faible. Leur durée de vie est assez limitée (souvent moins de 1000 heures). Cela peut convenir pour certaines utilisations (par exemple pour diffuser des parfums dans une pièce), mais pas pour d'autres. Par ailleurs, ces dispositifs nécessitent une maintenance attentive car la membrane risque de se colmater ; dans ce contexte la qualité d'eau (calcaire, filtré, pH, température de l'eau) est importante.. Ces systèmes sont également relativement sensibles à la pression d'eau au-dessus de la membrane et à la pression d'air dans le volume de diffusion ; des problèmes de fuite d'eau peuvent apparaître. Ce manque de robustesse des dispositifs utilisant une membrane perforée peut limiter leur intérêt pour certains types d'applications, notamment industrielles et surtout les produits destinés au grand public (frigo, cave électrique), qui nécessitent une durée de vie importante (de l'ordre de 5 à 10 ans) et pour lesquels des procédures d'entretien complexes et fréquentes ne sont pas envisageables.

On connaît également des dispositifs de pulvérisation utilisant une cuve pourvue d'une buse à concentration et d'un élément piézo-électrique, comme décrit par exemple dans les documents EP 0 691 162 A1 et EP 0 782 885 A1 (IMRA Europe). Ces dispositifs sont très fiables et sont utilisés couramment pour humidifier et rafraîchir des produits frais sur des étals de vente, comme décrit dans les documents FR 2 899 135 A1, FR 2 921 551 A1, WO 2014/023907 A1, WO 2013/034847 A1 (ARECO), FR 2 690 510 A1 (Techsonic). Leur débit est important et convient pour de nombreuses utilisations techniques et industrielles ; en contrepartie leur consommation électrique est significative (de l'ordre de 10 à 70 W par élément piézo-électrique). Ne comportant pas de membranes perforées, ces dispositifs ne risquent pas d'être perturbés dans leur fonctionnement par des problèmes de colmatage ; ils présentent une durée de vie de 5000 heures en moyenne. En revanche, ces dispositifs ont une certaine taille qui est principalement liée à l'épaisseur d'eau nécessaire pour le bon fonctionnement de l'élément piézoélectrique (généralement de 20 à 35 mm), au diamètre de l'élément piézo-électrique, et aussi à la hauteur de la chambre de diffusion nécessaire pour la création d'un jet acoustique presque vertical et très puissant (généralement de 40 à 100 mm).

Il existe des dispositifs dont le rendement « débit d'eau / puissance électrique » a été optimisé. Ces systèmes sont généralement équipés des buses agissant comme concentrateurs des ondes acoustiques générées par l'élément piézo-électrique travaillant à très haute fréquence (de l'ordre de quelques MHz), d'une pompe de circulation d'eau, d'un capteur de niveau d'eau, d'un ventilateur et d'une alimentation électrique spécifique. L'intégration de tous ces éléments dans un petit volume reste un point bloquant pour beaucoup d'applications qui nécessitent un système très performant (rapport débit / puissance électrique) et d'une très grande fiabilité (surtout l'élément piézoélectrique, le capteur de niveau d'eau, le ventilateur, la pompe, les générateurs à haute fréquence).

Les tentatives pour miniaturiser ces dispositifs se heurtent au besoin de garder la face active de l'élément piézo-électrique recouverte en permanence d'une couche d'eau suffisamment épaisse pour éviter son échauffement excessif: Par ailleurs, la focalisation des ultrasons par la buse ne peut se faire de manière efficace que dans un liquide et sur une certaine longueur de chemin parcouru par les ondes acoustiques dans le milieu liquide. Pour ces raisons, une épaisseur minimale d'eau de l'ordre de 20 à 35 mm est nécessaire dans les dispositifs selon l'état de la technique ; cette épaisseur dépend quelque peu du diamètre de l'élément piézo-électrique et de la puissance électrique qu'il absorbe.

Dans tous les cas, même dans un système miniaturisé de ce type, la présence d'une pompe de circulation d'eau et d'un ventilateur s'ajoute à la consommation électrique de l'élément piézo-électrique.

Un objectif que la présente invention cherche à atteindre est de proposer un dispositif de nébulisation miniaturisé, en particulier de très faible hauteur, tout en présentant un débit important et une consommation électrique faible.

Un autre objectif que la présente invention cherche à atteindre est de proposer un tel dispositif de nébulisation qui soit d'une grande fiabilité, notamment qui ne présente pas de risque substantiel de colmatage.

Un autre objectif que la présente invention cherche à atteindre est de proposer un tel dispositif de nébulisation qui n'a pas besoin d'une maintenance fréquente,

**Objets de l'invention**

Selon l'invention, au moins un des objectifs ci-dessus est atteint par au moins un des objets principaux de l'invention.

Un premier objet principal de l'invention est un dispositif de nébulisation (I) capable de générer un brouillard (BR) de gouttelettes d'un liquide à partir d'un liquide (L), ledit dispositif comprenant :

- une cuve (60) de réception dudit liquide,
- un élément piézo-électrique (30) apte à émettre des ondes acoustiques dans ledit liquide (L),
- une chambre de nébulisation (20) comprenant

    des moyens (82) d'admission d'air dans cette chambre
    des moyens de génération dudit brouillard de gouttelettes (J)
    au moins un canal (22) de diffusion de brouillard hors dudit dispositif (1), présentant un orifice aval de diffusion (21)

    ledit dispositif comprenant en outre au moins une parmi les caractéristiques suivantes i) à iv) :

    i) la section (d21) de chaque orifice de diffusion (21) est comprise entre 2 et 50 millimètres, de préférence entre 3 et 15 millimètres, encore de préférence entre 4 et 10 millimètres, notamment voisine de 6 millimètres ;
    ii) la hauteur (H23) du conduit de diffusion des gouttes, reliant les moyens d'admission (82) et les canaux de diffusion (22), est comprise entre 2 et 100 millimètres, de préférence entre 4 et 20 millimètres, encore de préférence entre 8 et 12 millimètres, notamment voisine de 12 millimètres ;
    iii) le rapport (S82/S21), entre la surface d'admission d'air dans la chambre et la somme des surfaces des différents orifices de diffusion (21), est supérieur à 1, notamment supérieur à 3, de préférence supérieur à 10 ;
    iv) la longueur (L20) de la chambre de nébulisation (20) est comprise entre 10 et 500 millimètres, de préférence entre 30 et 160 millimètres, encore de préférence entre 30 et 100 millimètres, notamment voisine de 90 millimètres, alors que la largeur (l20) de la chambre de nébulisation (20) est comprise entre 5 et 500 millimètres, de préférence entre 16 et 60 millimètres, encore de préférence entre 16 et 30 millimètres, notamment voisine de 30 millimètres.

Un deuxième objet principal de l'invention est un dispositif de nébulisation (I) capable de générer un brouillard (BR) de gouttelettes d'un liquide à partir d'un liquide (L),
ledit dispositif comprenant :

- une cuve (60) de réception dudit liquide,
- un élément piézo-électrique (30) apte à émettre des ondes acoustiques dans ledit liquide (L),
- une chambre de nébulisation (20) comprenant

    des moyens (82) d'admission d'air dans cette chambre
    des moyens de génération dudit brouillard de gouttelettes (J)
    des moyens (21) de diffusion de brouillard hors dudit dispositif (1),

    ledit dispositif comprenant en outre
- des moyens de mesure aptes à mesurer un paramètre représentatif du courant consommé par l'élément piézoélectrique
- des moyens d'alerte, propres à être activés en réponse auxdits moyens de mesure, lorsque la valeur instantanée dudit paramètre représentatif se situe en dehors d'une plage prédéterminée,

le fond (20') de la chambre de nébulisation (20) étant située à une altitude supérieure à celle du fond (60') de la cuve (60) de réception dudit liquide.

Un troisième objet principal de l'invention est un dispositif de nébulisation (I) capable de générer un brouillard (BR) de gouttelettes d'un liquide à partir d'un liquide (L),

ledit dispositif comprenant :

- une cuve (60) de réception dudit liquide,
- un élément piézo-électrique (30) apte à émettre des ondes acoustiques dans ledit liquide (L),
- une chambre de nébulisation (20) comprenant

   des moyens (82) d'admission d'air dans cette chambre
   des moyens de génération dudit brouillard de gouttelettes (J)
   des moyens (21) de diffusion de brouillard hors dudit dispositif (1),

la plus grande hauteur (H1) du dispositif étant inférieure est inférieure à 100 mm, de préférence inférieure à 50 mm, et encore plus préférentiellement inférieure à 10 mm.

Un quatrième objet principal de l'invention est un dispositif de nébulisation (I) capable de générer un brouillard (BR) de gouttelettes d'un liquide à partir d'un liquide (L), ledit dispositif comprenant :

- une cuve (60) de réception dudit liquide,
- un élément piézo-électrique (30) apte à émettre des ondes acoustiques dans ledit liquide (L),
- une chambre de nébulisation (20) comprenant

   des moyens (82) d'admission d'air dans cette chambre
   des moyens de génération dudit brouillard de gouttelettes (J)
   des moyens (21) de diffusion de brouillard hors dudit dispositif (1),

ledit dispositif comprenant en outre des moyens (122, 123 ; 126, 127) de contrôle du niveau de liquide dans ladite cuve.

Un cinquième objet principal de l'invention est un dispositif de nébulisation (I) capable de générer un brouillard (BR) de gouttelettes d'un liquide à partir d'un liquide (L), ledit dispositif comprenant :

- une cuve (60) de réception dudit liquide,
- un élément piézo-électrique (30) apte à émettre des ondes acoustiques dans ledit liquide (L),
- une chambre de nébulisation (20) comprenant

   des moyens (82) d'admission d'air dans cette chambre
   des moyens de génération dudit brouillard de gouttelettes (J)
   des moyens (21) de diffusion de brouillard hors dudit dispositif (1),

ledit dispositif comprenant en outre

- un caisson (151) sensiblement fermé, ladite cuve et ladite chambre de nébulisation étant ménagées dans ce caisson,
- le rapport (S60/S151) entre la surface de la cuve (60) et la surface du caisson (151) étant supérieur à 5, notamment à 10.

Un sixième objet principal de l'invention est un dispositif de nébulisation (I) capable de générer un brouillard (BR) de gouttelettes d'un liquide à partir d'un liquide (L), ledit dispositif comprenant :

- une cuve (60) de réception dudit liquide,
- un élément piézo-électrique (30) apte à émettre des ondes acoustiques dans ledit liquide (L),
- une chambre de nébulisation (20) comprenant

   des moyens (82) d'admission d'air dans cette chambre
   des moyens de génération dudit brouillard de gouttelettes (J)
   des moyens (21) de diffusion de brouillard hors dudit dispositif (1),

ledit dispositif comprenant en outre

- un caisson (151) sensiblement fermé, ladite cuve et ladite chambre de nébulisation étant ménagées dans ce caisson,
- ledit caisson comprenant en outre un voile (10) de séparation entre cette cuve et cette chambre de nébulisation, ce voile s'étendant entre lesdites parois latérales et présentant un passage (11), permettant l'écoulement du liquide de la cuve vers la chambre de nébulisation.

Un septième objet principal de l'invention est un dispositif de nébulisation (I) capable de générer un brouillard (BR) de gouttelettes d'un liquide à partir d'un liquide (L),
ledit dispositif comprenant :

- une cuve (60) de réception dudit liquide,
- un élément piézo-électrique (30) apte à émettre des ondes acoustiques dans ledit liquide (L),
- une chambre de nébulisation (20) comprenant

    des moyens (82) d'admission d'air dans cette chambre
    des moyens de génération dudit brouillard de gouttelettes (J)
    des moyens (21) de diffusion de brouillard hors dudit dispositif (1),

ledit dispositif comprenant en outre
- un caisson (151) sensiblement fermé, ladite cuve et ladite chambre de nébulisation étant ménagées dans ce caisson,
- une plage (111), située à l'extérieur du caisson, cette plage étant équipée d'au moins un organe auxiliaire, notamment un ventilateur (131) et/ou une carte électronique de commande (141), fixé sur ladite plage, notamment de manière amovible.

Selon d'autres caractéristiques additionnelles du dispositif de l'invention :

a1) le dispositif comprend au moins les deux caractéristiques suivantes i) et ii) :

    i) la section (d21) de chaque orifice de diffusion (21) est comprise entre 2 et 50 millimètres, de préférence entre 3 et 15 millimètres, encore de préférence entre 4 et 10 millimètres, notamment voisine de 6 millimètres ;
    ii) la hauteur (H23) du conduit de diffusion des gouttes, reliant les moyens d'admission (82) et les canaux de diffusion (22), est comprise entre 2 et 100 millimètres, de préférence entre 4 et 20 millimètres, encore de préférence entre 8 et 12 millimètres, notamment voisine de 12 millimètres.

a2) le dispositif comprend les quatre caractéristiques suivantes i) à iv) :

    i) la section (d21) de chaque orifice de diffusion (21) est comprise entre . 2 et 50 millimètres, de préférence entre 3 et 15 millimètres, encore de préférence entre 4 et 10 millimètres, notamment voisine de 6 millimètres ;
    ii) la hauteur (H23) du conduit de diffusion des gouttes, reliant les moyens d'admission (82) et les canaux de diffusion (22), est comprise entre 2 et 100 millimètres, de préférence entre 4 et 20 millimètres, encore de préférence entre 8 et 12 millimètres, notamment voisine de 12 millimètres ;
    iii) le rapport (S82/S21), entre la surface d'admission d'air dans la chambre et la somme des surfaces des différents orifices de diffusion (21), est supérieur à 1, notamment supérieur à 3, de préférence supérieur à 10 ;
    iv) la longueur (L20) de la chambre de nébulisation (20) est comprise entre 10 et 500 millimètres, de préférence entre 30 et 160 millimètres, encore de préférence entre 30 et 100 millimètres, notamment voisine de 90 millimètres, alors que la largeur (l20) de la chambre de nébulisation (20) est comprise entre 5 et 500 millimètres, de préférence entre 16 et 60 millimètres, de préférence entre 16 et 30 millimètres, notamment voisine de 30 millimètres.

a3) le dispositif comprend en outre des moyens (50 ; 430' ; 530') de focalisation des ondes acoustiques émises par ledit élément piézo-électrique (30) sur une zone focale (PF) pour créer un jet dudit brouillard de gouttelettes (J).

a4) le dispositif comprend en outre la caractéristique suivante v) :
v) la plus petite distance (D22), selon l'axe horizontal, entre la zone focale (PF) et le débouché amont du canal de diffusion (22), adjacent à ce point focal, est comprise entre 2 et 300 millimètres, notamment entre 5 et 60 millimètres, de préférence entre 10 et 30 millimètres, en particulier voisine de 20 millimètres.

a5) les moyens de focalisation comprennent un organe de réflexion acoustique (50) comprenant une surface de réflexion acoustique (51) destinée à être immergée dans ledit liquide (L), cette surface étant apte à focaliser lesdites ondes acoustiques.

a6) les moyens de focalisation comprennent une surface active incurvée (430' ; 530') de l'élément piézo-électrique (430 ; 530).

b) la plus grande hauteur (H1) du dispositif est inférieure à 100 millimètres, notamment à 50 millimètres, de préférence à 30 millimètres

b') le rapport (S60/S151) entre la surface de la cuve (60) et la surface du caisson (151) est supérieur à 5, notamment supérieur à 10.

c) le fond (20') de la chambre de nébulisation (20) est située à une altitude supérieure à celle du fond (60') de la cuve (60) de réception dudit liquide.

c') le dispositif comprend un caisson (151) sensiblement fermé, ladite cuve et ladite chambre de nébulisation étant ménagées dans ce caisson.

d) le dispositif comprend en outre une plage (111), située à l'extérieur du caisson, cette plage étant équipée d'au moins un organe auxiliaire, notamment un ventilateur (131) et/ou une carte électronique de commande (141), fixé sur ladite plage, notamment de manière amovible.

d') la plage est creusée d'au moins une fente (111') de passage d'air, et il est prévu un tiroir (112) apte à obturer tout ou partie de la ou des fente(s).

e) le dispositif comprend un épaulement (8, 108) délimitant une partie plus large (151A) et une partie plus étroite (151B), la plage de fixation (111) s'étendant en regard de l'épaulement, le long de la partie plus étroite.

e') ledit caisson est bordé par un fond (2), une paroi supérieure (102) et des parois latérales (103-109), le fond et la paroi supérieure étant plans.

f) le dispositif comprend une embase (1) et un capot (101) apte à être fixé, notamment de manière amovible, sur cette embase, cette embase et ce capot délimitant ledit caisson.

f) l'élément piézo-électrique (30) est reçu, notamment de manière amovible, dans une ouverture (81) ménagée dans une paroi latérale du caisson.

g) le dispositif comprend en outre un voile (10) de séparation entre la cuve et la chambre de nébulisation, ce voile présentant un passage (11), permettant l'écoulement du liquide de la cuve vers la chambre de nébulisation.

g') la hauteur maximale (Lmax) de liquide dans la chambre (20) est inférieure à 20 millimètres, notamment à 18 millimètres, de préférence à 15 millimètres.

h) le dispositif comprend en outre un déflecteur (43) du jet de brouillard (BR).

h') le déflecteur forme lesdits moyens de séparation entre l'air et le jet de gouttelettes.

j) le déflecteur (43) appartient à un insert (40), apte à être fixé notamment de manière amovible sur le voile (10) et/ou les parois latérales du caisson.

j') le déflecteur (43) définit une zone dite amont (20') de la chambre de nébulisation (20), dans laquelle le déflecteur permet d'éviter le contact du jet (J) avec l'air provenant de l'extérieur du caisson (151).

k) les moyens d'admission d'air comprennent au moins une admission d'air (44), définie par les parois en regard appartenant respectivement, d'une part au déflecteur et, d'autre part, au voile de séparation et/ou au caisson.

k') la cuve forme une zone d'accumulation (60A) de liquide par gravité, située en regard du passage (11).

l) la zone d'accumulation de liquide par gravité est bordée par au moins une zone d'écoulement de liquide par gravité, dont le fond est formé par une rampe (62, 63).

l') l'air et le jet de gouttelettes s'écoulent en service selon une première direction, depuis les moyens d'arrivée en direction des moyens de diffusion, alors que le jet de gouttelettes s'écoule dans les canaux de diffusion selon une deuxième direction, différente de la première direction, la première direction étant notamment horizontale alors que la deuxième direction est notamment verticale.

m) le dispositif est dépourvu de ventilateur.

m') le dispositif comprend en outre des moyens (122, 123 ; 126, 127) de contrôle du niveau de liquide dans ladite cuve.

n) les moyens (122, 123 ; 126, 127) de contrôle du niveau de liquide dans la cuve sont des moyens de contrôle visuel, et comprennent notamment au moins une ligne (122, 123) ménagée sur une paroi (107) transparente du dispositif, correspondant à un niveau minimal et/ou maximal prédéterminé(s) de liquide dans la cuve.

n') les moyens (126, 127) de contrôle du niveau de liquide dans la cuve sont des moyens de contrôle mécaniques et comprennent notamment un clapet (126) monté flottant à la surface du liquide, ce clapet étant mobile entre une première position fonctionnelle, dans laquelle il autorise le remplissage de la cuve (60), et une deuxième position fonctionnelle, dans laquelle il interdit le remplissage de la cuve (60).

o) le dispositif comprend en outre : ,

- des moyens de mesure aptes à mesurer un paramètre représentatif du courant consommé par l'élément piézoélectrique
- des moyens d'alerte, propres à être activés en réponse auxdits moyens de mesure, lorsque la valeur instantanée dudit paramètre représentatif se situe en dehors d'une plage prédéterminée,

o') le dispositif comprend en outre des premiers moyens de commande, propres à activer des moyens d'arrivée de liquide dans la cuve, en réponse auxdits moyens d'alerte.

p) le dispositif comprend en outre des seconds moyens de commande, propres à activer des moyens d'arrêt de l'élément piézoélectrique, en réponse auxdits moyens d'alerte.

p') le dispositif comprend en outre au moins un organe d'alerte, propre à émettre au moins un signal perceptible par un utilisateur, en réponse auxdits moyens d'alerte.

q) les moyens d'alimentation en liquide comprennent une électrovanne.

Les caractéristiques additionnelles a1), a2), ..., q), listées ci-dessus, peuvent être mises en oeuvre avec l'un ou l'autre des objets principaux ci-dessus, individuellement ou en combinaisons quelconques, techniquement compatibles.

L'invention a également pour objet un ensemble de nébulisation comprenant un volume intérieur bordé par des parois, dans lequel au moins une échancrure est ménagée dans au moins une paroi, cet ensemble comportant au moins un dispositif tel que ci-dessus, ce dispositif reposant sur un rebord bordant ladite échancrure, les moyens (21) de diffusion de brouillard de ce dispositif étant placés dans ladite échancrure.

Selon d'autres caractéristiques additionnelles de l'invention :

- l'ensemble de nébulisation présente une hauteur (H2) inférieure à 100 mm, de préférence inférieure à 50 mm, et encore plus préférentiellement inférieure à 10 mm
- l'ensemble de nébulisation comprend un réceptacle (201) et un couvercle (301) apte à être fixé, notamment de manière amovible, sur ce réceptacle, ce réceptacle (201) et ce couvercle (301) délimitant ledit volume intérieur de réception du dispositif de nébulisation.

L'invention a également pour objet une pièce de structure ou d'habillage, notamment une double paroi d'une cave de maturation, par exemple pour fromages, viandes, cuirs, ou d'une vitrine réfrigérée pour le contrôle de l'humidité, un habillage supérieur d'une enceinte de réfrigération et/ou d'humidification de produits frais, de type conteneur, cuve, armoire de stockage de produits frais ou encore chambre froide, un habillage du plafond de l'habitacle d'un véhicule, notamment d'une voiture, d'un bus ou d'un avion, afin de rafraîchir les passagers, un faux-plafond utilisé en construction mécanique, ou encore un plafond ou rayonnage de conteneur de transport, cette pièce de structure ou d'habillage comprenant au moins un ensemble de nébulisation tel que ci-dessus.

**Figures**

Les figures 1 à 33 illustrent un mode de réalisation d'un dispositif de nébulisation selon l'invention.

La figure 1 est une vue en perspective éclatée, illustrant les différents éléments constitutifs du dispositif de nébulisation selon l'invention.

La figure 2 est une vue en perspective, analogue à la figure 1, illustrant le dispositif de nébulisation selon l'invention, dans sa configuration assemblée.

La figure 3 est une vue de dessus du dispositif de nébulisation selon l'invention.

La figure 4 est une vue en coupe longitudinale du dispositif de nébulisation selon l'invention, selon la ligne IV-IV de la figure 2.

La figure 5 est une vue en perspective, à plus grande échelle, illustrant plus particulièrement la chambre de nébulisation appartenant au dispositif de nébulisation selon l'invention.

La figure 6 est une vue en perspective, analogue à la figure 5, illustrant la chambre de nébulisation de cette figure 5, ainsi qu'un insert formant déflecteur, rapporté sur les parois de cette chambre.

La figure 7 est une vue en perspective, avec arrachement selon une coupe longitudinale, illustrant la mise en oeuvre du dispositif de nébulisation selon l'invention.

Les figures 8 et 9 sont des vues en coupe à plus grande échelle, illustrant plus particulièrement la mise en oeuvre de la chambre de nébulisation du dispositif de nébulisation selon l'invention.

La figure 10 est une vue en perspective éclatée, illustrant l'intégration du dispositif de nébulisation selon l'invention au sein d'un ensemble de nébulisation.

La figure 11 est une vue en perspective, illustrant plus particulièrement un volet appartenant à l'ensemble de nébulisation de la figure 10.

La figure 12 est une vue en perspective, analogue à la figure 10, illustrant cet ensemble de nébulisation dans sa configuration assemblée.

La figure 13 est une vue en perspective, à plus grande échelle, illustrant plus particulièrement le détail XIII de la figure 12.

La figure 14 est une vue en perspective avec arrachement, analogue à la figure 7, illustrant une variante de l'invention dans laquelle le dispositif de nébulisation est dépourvu d'un déflecteur.

Les figures 15 et 16 sont des vues en coupe analogues aux figures 8 et 9, illustrant la mise en oeuvre de la chambre de nébulisation du dispositif de nébulisation selon la figure 14.

Les figures 17 à 19 sont des vues schématiques, illustrant trois étapes de la mise en oeuvre d'un dispositif de nébulisation conforme à une variante de réalisation de l'invention, lequel est dépourvu de capteur de liquide.

La figure 20 est un graphe, illustrant les variations du courant consommé par l'élément piézoélectrique appartenant au dispositif selon les figures 17 à 19, en fonction de la tension appliquée aux bornes de cet élément, pour chacun des trois niveaux de liquide de ces figures 17 à 19.

La figure 21 est une vue schématique, illustrant certains organes de commande de l'élément piézoélectrique appartenant au dispositif selon les figures 17 à 20.

La figure 22 est une vue schématique, illustrant de façon plus détaillée certains autres organes de commande de l'élément piézoélectrique appartenant au dispositif selon les figures 17 à 21.

La figure 23 est un schéma électronique du dispositif selon les figures 17 à 22.

La figure 24 est un graphe, illustrant la variation du courant consommé par l'élément piézoélectrique du dispositif selon les figures 17 à 23, en fonction du niveau de remplissage du récipient.

La figure 25 est une vue en perspective avec arrachement selon une coupe longitudinale, analogue à la figure 7, illustrant le fond de la cuve et le fond de la chambre de nébulisation du dispositif des figures 17 à 24.

La figure 26 est une vue en coupe longitudinale, analogue à la figure 4, illustrant sous un autre angle le fond de la cuve et le fond de la chambre de nébulisation du dispositif de la figure 25.

La figure 27 est une vue en perspective, à grande échelle, illustrant des moyens de contrôle visuel du niveau de liquide, appartenant à un dispositif de nébulisation selon une autre variante de réalisation de l'invention.

Les figures 28 et 29 sont des vues en coupe longitudinale, illustrant deux positions fonctionnelles d'un clapet de fermeture, appartenant à un dispositif de nébulisation selon encore une autre variante de réalisation de l'invention.

Les figures 30 et 31 sont des vues coupe analogues à la figure 15, illustrant deux variantes de réalisation du dispositif de nébulisation de l'invention, qui ne font pas appel à un concentrateur acoustique mais dont l'élément piézo-électrique est focalisé.

Les figures 32 et 33 sont des vues coupe analogues à la figure 15, illustrant deux variantes de réalisation du dispositif de nébulisation de l'invention, qui ne font pas appel à un concentrateur acoustique et dont l'élément piézo-électrique n'est pas focalisé.

Liste des repères utilisés sur les figures :

| I | Dispositif selon l'invention | XX | Axe |
|---|---|---|---|
| YY | Axe | ZZ | Axe |
| 1 | Embase | 2 | Fond de 1 |
| 1A | Région médiane de 1 | 1B,1C | Régions d'extrémité de 1 |
| 3 | Paroi latérale principale | 4A,4B | Parois frontales |
| 5,6,7 | Parois latérales secondaires | 8,9 | Epaulements |
| 10 | Voile | 81 | Ouverture dans 8 |
| 82 | Encoche dans 8 | 11 | Passage dans 10 |
| 12 | Bandeau | 13 | Nervures |
| 20 | Chambre de nébulisation | 21 | Orifices de 20 |
| 22 | Canaux d'écoulement | 20A | Zone amont de 20 |
| 23 | Conduit de diffusion | H23 | Hauteur de 23 |
| L20, l20 | Longueur et largeur de 20 | 20' | Fond de 20 |
| 30 | Elément piézoélectrique | 30' | Surface active de 30 |
| 30A | Zone immergée de 30 | 30B | Zone non immergée de 30' |
| H30 | Hauteur de 30 | | |
| 40 | Insert | 41 | Coiffe de 40 |
| 42 | Languettes de 41 | 43 | Déflecteur |
| 44 | Admissions d'air | 50 | Concentrateur acoustique |
| PF | Point focal | 51 | Surface de réflexion de 50 |
| 60 | Cuve | 60' | Fond de 60 |
| H60 | Hauteur de 60 | 61' | Socle de 60 |
| 61 | Méplat de 60 | 60A | Zone d'accumulation de 60 |
| 62,63 | Rampes | 64 | Pattes de 63 |
| L | Liquide à nébuliser | H11 | Hauteur de 11 |
| Lmax | Hauteur maximale de liquide | hF | Profondeur du point focal |
| DF | Distance entre PF et 30' | DE | Distance entre 30' et 51 |
| BR | Brouillard | J | Jet de gouttelettes |
| AIR | Air | D22 | Distance entre 22 et PF |
| 101 | Capot | 101A | Région médiane de 101 |
| 101B,101C | Régions d'extrémité de 101 | 102 | Paroi supérieure de 101 |
| 103 | Paroi latérale principale | 104A,104B | Parois frontales |
| 105,106,107 | Parois latérales secondaires | 108,109 | Epaulements |
| 111 | Plage | 111' | Fentes de 111 |
| 112 | Tiroir | 113 | Doigts |

(suite)

| 114 | Ergots | 121 | Trappe |
|---|---|---|---|
| 122,123 | Lignes basse et haute sur 107 | 124 | Plot de guidage |
| 126 | Clapet | 127 | Joint |
| 128 | Rebord | 131 | Ventilateur |
| 141 | Carte électronique | 151 | Caisson |
| 151A | Région médiane de 101 | 151B,151C | Régions d'extrémité de 101 |
| II | Ensemble selon l'invention | 201 | Réceptacle de II |
| 202 | Fond | 203 | Parois latérales de 201 |
| 204 | Echancrure de 201 | 205 | Rebord |
| 301 | Couvercle de II | 302 | Volet |
| L1,l1,H1 | Dimensions de I | L2,l2,H2 | Dimensions de II |
| Hopt | Hauteur optimale | Hint | Hauteur intermédiaire |
| A | Angle de 21 | Iopt | Intensité de courant optimale |
| Iint | Intensité de courant intermédiaire | Icrit | Intensité de courant critique |
| C | Système de régulation | E | Electrovanne |
| 100 | Carte | 120 | Driver |
| 130 | Transistor | 140 | Circuit d'adaptation |
| 180 | Module d'alimentation | 190 | Carte électronique |
| 200 | Microcontrôleur | 210 | Module d'entrées |
| 220 | Module de sortie | 230 | Sous ensemble |
| 240 | Module de 190 | 250 | Eléments de commande |
| 260 | Informations sur le courant | 270 | Informations sur la température |
| 420 | Chambre de nébulisation | 432 | Paroi inclinée |
| $\alpha 432$ | Angle de 432 | 430 | Elément piézo-électrique |
| 430' | Face active de 430 | 482 | Encoche |
| 520 | Chambre de nébulisation | 501A | Fond de 520 |
| 530 | Elément piézo-électrique | 530' | Face active de 530 |
| 620 | Chambre de nébulisation | 632 | Paroi inclinée |
| 630 | Elément piézo-électrique | 682 | Encoche |
| 720 | Chambre de nébulisation | 701A | Fond de 720 |
| 730 | Elément piézo-électrique | 730' | Face active de 530 |

## Description détaillée

Le dispositif de nébulisation selon l'invention, lequel est désigné dans son ensemble par la référence I, présente une forme globalement parallélépipédique. Sur les différentes figures, on suppose qu'il est en position horizontale. Comme cela sera décrit plus en détail dans ce qui suit, ses deux dimensions selon les axes XX et YY du plan horizontal, sont très supérieures à sa dimension selon l'axe vertical ZZ. Ce dispositif selon l'invention est avantageusement réalisé en un matériau moulable, en particulier en une matière plastique telle par exemple du polyéthylène, de l'ABS ou du PVC.

Le dispositif de nébulisation I comprend essentiellement une embase, désignée dans son ensemble par la référence 1, ainsi qu'un capot désigné dans son ensemble par la référence 101. L'embase, qui se compose d'un fond 2 à partir duquel s'étendent des parois d'enceinte périphériques, présente une forme à peu près rectangulaire. Elle se divise en trois régions, à savoir une région médiane 1A, en référence à la direction longitudinale, ainsi que deux régions d'extrémité 1B et 1C, respectivement un peu plus large et un peu moins large que la région médiane précitée. Par conséquent, les parois d'enceinte périphériques comprennent tout d'abord une paroi latérale dite principale 3, s'étendant sur toute la longueur de l'embase, deux parois frontales opposées 4A et 4B, ainsi que trois parois latérales dites secondaires 5, 6 et 7, séparées deux à deux par des épaulements 8 et 9.

Le capot 101 présente une forme à peu près rectangulaire, similaire à celle de l'embase 1. Il se divise donc également en trois régions, à savoir une région médiane 101A, ainsi que deux régions d'extrémité 101B et 101C. Différentes parois d'enceinte périphériques s'étendent vers le bas, à partir de la paroi supérieure 102 de ce capot. De manière analogue à ce qui a été décrit en référence à l'embase 1, les parois d'enceinte périphériques comprennent tout d'abord une paroi latérale dite principale 103, deux parois frontales opposées 104A et 104B, ainsi que trois parois latérales dites secondaires 105, 106 et 107, séparées deux à deux par des épaulements 108 et 109.

La fixation mutuelle du capot sur l'embase est réalisée par tout moyen approprié. De manière préférée, cette fixation est de type amovible, typiquement par encliquetage élastique grâce aux propriétés de la matière plastique constitutive de ces éléments mécaniques. On peut aussi prévoir une liaison par vissage, sertissage ou collage. Une fois solidarisés l'un à l'autre, l'embase et le capot définissent un caisson 151, qui se divise en une région médiane 151A, ainsi que deux régions d'extrémité 151B et 151C. Ce caisson 151 possède une paroi de fond, formée par le fond 2 de l'embase, une paroi supérieure formée par la paroi 102 du capot, ainsi que des parois latérales formées par les parois d'enceinte 103 à 109 du capot 101. Le volume intérieur sensiblement fermé de ce caisson délimite, comme on va le voir ci-après, une cuve 60 de réception de liquide et une chambre de nébulisation 20, séparées par un voile intercalaire 10.

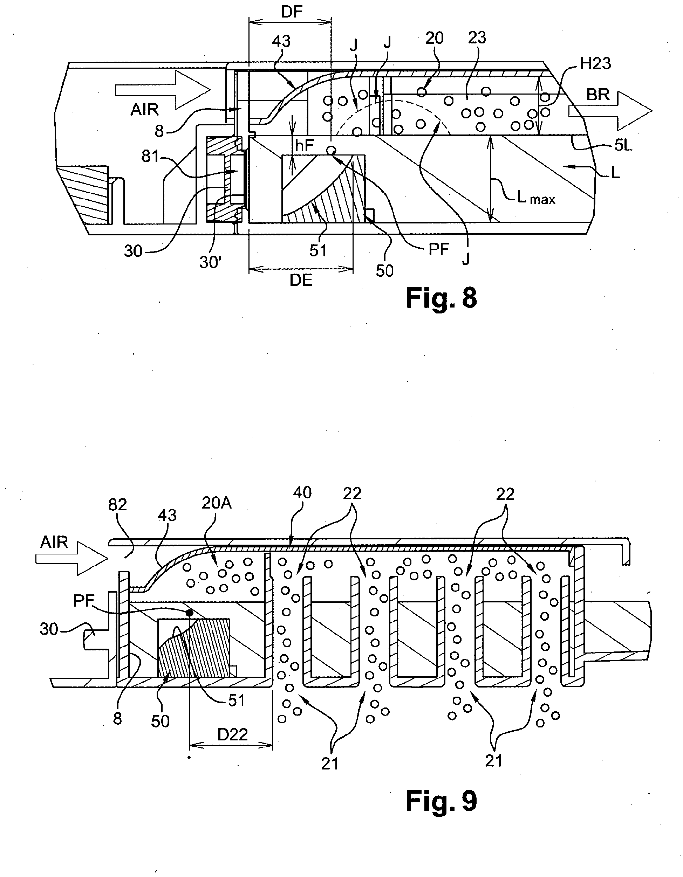

Ce voile de matière 10 s'étend depuis l'épaulement 8, sensiblement au niveau de sa jonction avec la paroi latérale 5, en direction de la paroi latérale adjacente 6. Ce voile délimite, avec cet épaulement et cette paroi latérale, la chambre de nébulisation 20 précitée. L'épaulement 8 est tout d'abord creusé, dans sa partie basse, d'une ouverture 81 (voir en particulier figure 8). Cette ouverture, formant logement ou gorge, permet la réception d'un élément piézo-électrique 30, de type connu en soi. La fixation de cet élément, sur les parois de cette ouverture, est assurée par tout moyen approprié. On préfère une fixation amovible, par encliquetage élastique. On peut aussi prévoir une fixation par vissage, sertissage ou collage. On préfère un mode de réalisation le plus simple possible, pour faciliter la maintenance du dispositif.

Cet épaulement 8 présente en outre, à son extrémité supérieure, une encoche 82 (voir en particulier figure 9) permettant l'arrivée d'air vers la chambre 20, comme on le verra ci-après. Au voisinage de l'épaulement 8, le voile 10 est creusé d'un passage 11, surmonté d'un bandeau 12, permettant l'arrivée de liquide comme on le verra ci-après. Ce voile est en outre pourvu de nervures 13 permettant la fixation d'un insert 40, décrit plus loin, lesquelles coopèrent avec des nervures complémentaires 6'b, prévues en regard sur la paroi latérale 6.

A l'opposé de l'ouverture 81 de fixation de l'élément piézo-électrique 30, le fond de la chambre 20 est percé de plusieurs orifices 21, dont la fonction apparaîtra à la lecture de la suite de la description. Dans l'exemple illustré, on a prévu quatre orifices placés les uns derrière les autres, selon la direction longitudinale du dispositif. A titre de variante, on peut prévoir un nombre différent et/ou une répartition spatiale différente de ces orifices. On peut notamment prévoir une autre forme de disposition, en particulier sous forme de matrice de trous, par exemple deux par deux ou trois par trois. Un fût vertical respectif, dont la hauteur est inférieure à celle du voile 10, s'étend à partir de chaque orifice 21, de manière à définir des canaux 22 d'écoulement du brouillard.

Entre l'ouverture 81 et les canaux 22, la chambre de nébulisation est équipée d'un organe de réflexion acoustique 50, encore dénommé concentrateur. Cet organe est fixé sur le fond de la chambre par tout moyen approprié, de préférence de manière amovible par encliquetage élastique, mais aussi par vissage, sertissage ou collage. La paroi de cet organe, en regard de l'élément piézo-électrique, définit une surface de réflexion acoustique 51. Dans un mode de réalisation avantageux, cette surface de réflexion acoustique 51 présente une forme permettant de focaliser les ondes acoustiques. Elle présente typiquement une forme de calotte ou de coupole et, de préférence, une forme parabolique dont la concavité est tournée à l'opposé de l'élément piézo-électrique.

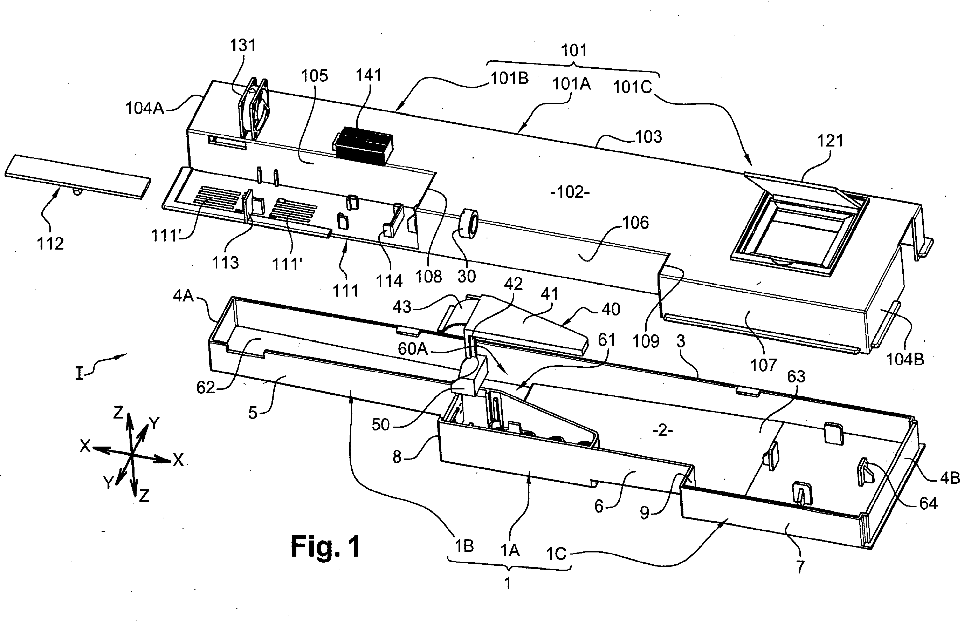

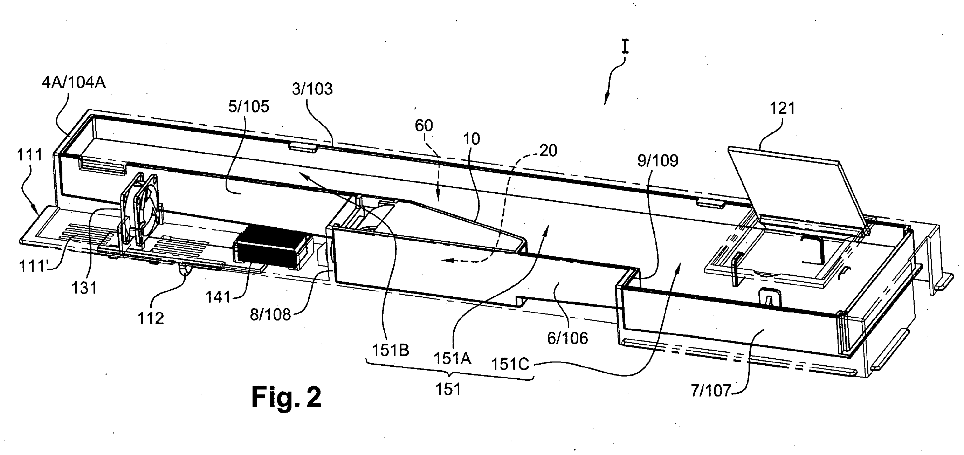

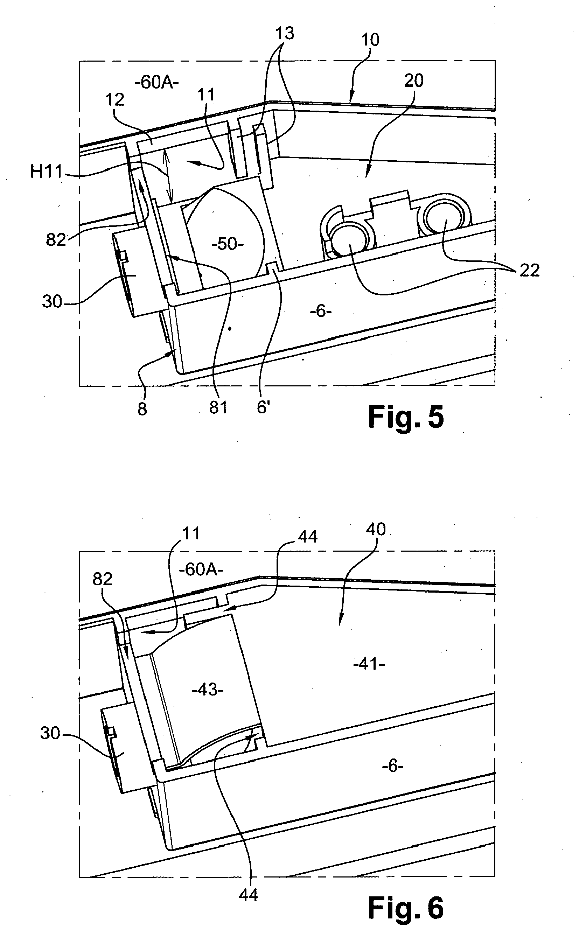

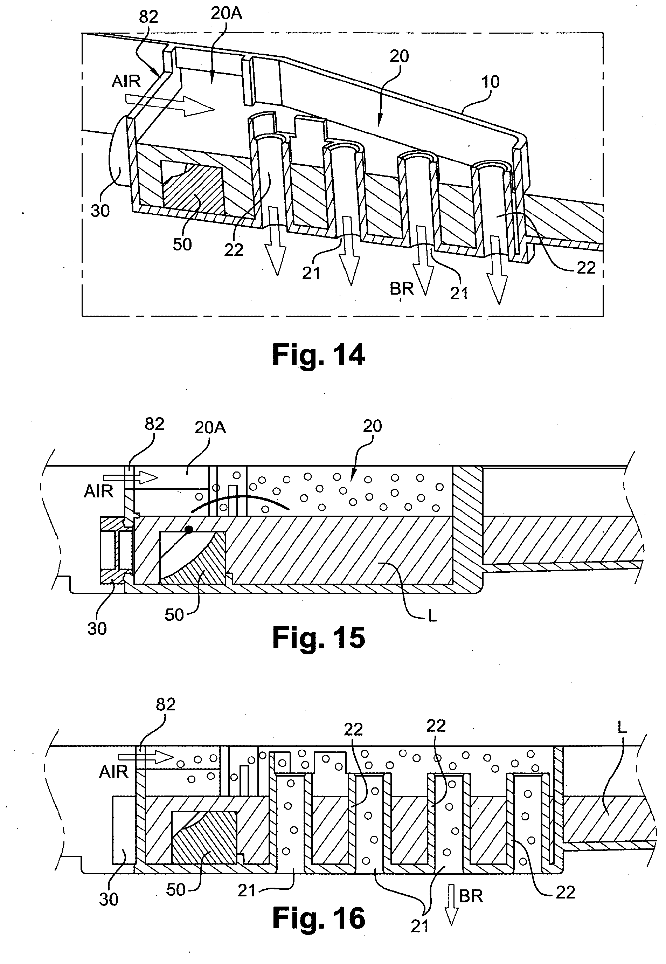

L'insert précité 40 comprend tout d'abord une coiffe horizontale 41, de forme effilée, destinée à recouvrir une portion de la chambre de nébulisation, à l'opposé de l'épaulement 8. Cette coiffe 41 est munie de languettes de fixation 42, destinées à coopérer avec les nervures 12 et 61 décrites ci-dessus. Dans le présent mode de réalisation, tel que décrit en référence aux figures 1 à 13, la coiffe 41 est prolongée par un déflecteur 43. Dans l'exemple illustré, ce déflecteur présente une forme arrondie sensiblement parabolique, dont l'extrémité libre fait saillie vers le bas en direction de l'élément piézo-électrique 30. A titre de variante, ce déflecteur peut présenter des formes différentes, comme par exemple droite, bombée ou parabolique. De manière préférée, cette forme doit suivre au mieux la trajectoire du jet de nébulisation. La largeur du déflecteur est inférieure à celle de la coiffe, de sorte que les parois latérales de ce déflecteur délimitent, avec les nervures en regard, des admissions d'air 44 en direction de la chambre de nébulisation. Comme on le verra dans ce qui suit en référence aux figures 14 à 16, le dispositif selon l'invention peut être dépourvu d'un tel déflecteur.

Le fond de la cuve 60 de réception de liquide comprend tout d'abord un méplat médian 61, prévu en regard du passage 11, lequel définit une zone 60A d'accumulation de liquide par gravité. De part et d'autre de ce méplat 61, formant nervure, le fond de cette cuve 60 forme deux rampes 62 et 63, permettant l'écoulement du liquide par gravité, en direction de la zone d'accumulation précitée. La rampe 63 est équipée de pattes 64, permettant la fixation du capot 101 par encliquetage, vissage, sertissage ou collage.

La paroi supérieure 102 du capot 101 est équipée d'une trappe 121, prévue en regard de la rampe 2C. Cette trappe, qui assure l'accès au volume intérieur du dispositif de nébulisation I, permet à un utilisateur de remplir ce volume intérieur au moyen du liquide, destiné à être nébulisé. Le capot 101 comprend en outre une plage 111, s'étendant à partir de la paroi 105 et de l'épaulement 108. Cette plage, de forme rectangulaire, est tout d'abord percée de fentes 111' d'admission d'air.

De plus un tiroir 112, susceptible d'être déplacé par un utilisateur, est monté coulissant le long de la paroi inférieure de cette plage. Ce tiroir est apte à obturer sélectivement tout ou partie des fentes 111', de manière à modifier leur section efficace de passage d'air. La plage 111 est en outre munie de doigts 113, formant un logement, permettant la fixation amovible d'un ventilateur 131, de tout type approprié. Comme on le verra dans ce qui suit, un tel ventilateur est cependant optionnel. La plage 111 est enfin équipée d'ergots 114, permettant la fixation amovible d'une carte électronique de commande 141, également de tout type approprié. De manière avantageuse, la carte 141 est intercalée entre le ventilateur et la chambre 20, de manière à pouvoir être refroidie en service par ce ventilateur. De manière préférée, la carte est placée au plus près de l'élément piézo-électrique 30, afin de réduire la longueur des fils de connexion entre cette carte et cet élément piézo-électrique 30.

Dans l'exemple illustré, le dispositif de nébulisation I est intégré dans un ensemble de nébulisation II conforme à l'invention, qui possède une forme globalement parallélépipédique. Cet ensemble II présente des dimensions légèrement supérieures à celles du dispositif I selon les axes XX et ZZ, ainsi qu'une dimension sensiblement supérieure à celle du dispositif 1 selon l'axe YY. Cet ensemble de nébulisation II est avantageusement réalisé en un matériau moulable, en particulier en une matière plastique analogue à celle du dispositif I. A titre de variante non illustrée, le dispositif peut être intégré aussi entre des tôles plastiques ou métalliques, au sein d'un espace confiné.

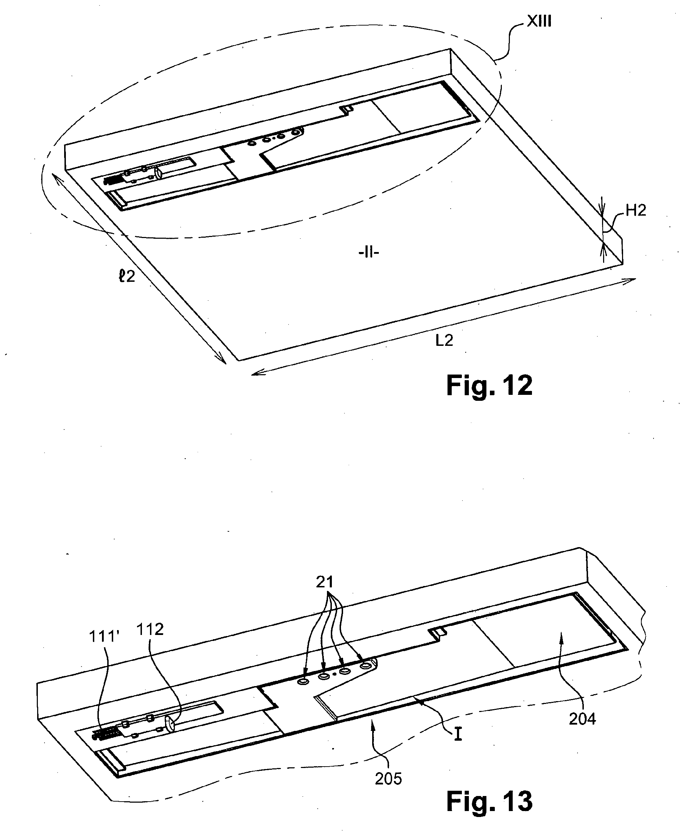

L'ensemble de nébulisation II comprend essentiellement un réceptacle 201 et un couvercle 301, lesquels forment un volume, intérieur de réception du dispositif de nébulisation I, tel que décrit ci-dessus. Le réceptacle 201 se compose d'un fond 202, à partir duquel s'étendent des parois d'enceinte périphériques 203. Ce fond 202 est creusé d'une échancrure 204, dont les dimensions selon les axes XX et YY sont légèrement inférieures à celles du dispositif I. Par conséquent, comme le montre notamment la figure 13, le dispositif I peut prendre appui, par sa face inférieure, sur le rebord périphérique 205 bordant cette échancrure.

On peut prévoir des moyens de positionnement et/ou de fixation, avantageusement de type amovible, entre cette face inférieure et ce rebord. Comme le montrent notamment les figures 12 et 13, les orifices 21 débouchent hors de l'échancrure 204, de manière à autoriser la nébulisation de liquide au travers de cette échancrure. De plus, le tiroir 112 est accessible pour l'utilisateur par cette même échancrure (voir figure 13), de manière à permettre un réglage aisé du débit d'air au travers des fentes d'admission. On notera qu'il s'agit d'un exemple non limitatif d'intégration.

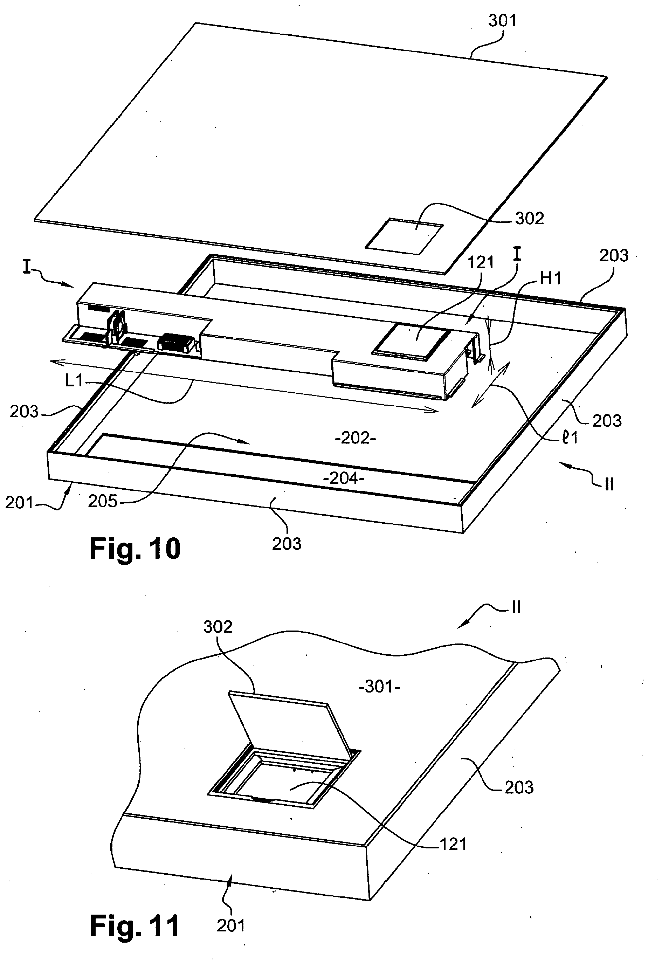

Le couvercle 301 est équipé d'un volet 302, visible notamment sur la figure 11. Ce volet est ménagé en regard de la trappe, de façon à permettre un accès aisé à celle-ci pour un utilisateur. La fixation mutuelle du couvercle 301 sur le réceptacle 201 est réalisée par tout moyen approprié. De manière préférée, cette fixation est de type amovible, typiquement par encliquetage élastique grâce aux propriétés de la matière plastique constitutive de ces éléments mécaniques. A titre de variante, on peut prévoir une fixation par vissage, sertissage ou collage.

La dimension selon l'axe XX, ou longueur L1, du dispositif I est par exemple comprise entre 100 et 600 millimètres (mm), notamment voisine de 400 mm. Sa dimension selon l'axe YY, ou largeur l1, est par exemple comprise entre 40 et 600 millimètres (mm), notamment voisine de 100 mm. Avantageusement la dimension selon l'axe ZZ, ou hauteur totale H1 du dispositif, est inférieure à 100 mm, de préférence inférieure à 50 mm, et encore plus préférentiellement inférieure à 30 mm. Ces dimensions L1, l1 et H1 sont visibles sur la figure 10.

La dimension selon l'axe XX, ou longueur L2, de l'ensemble II est par exemple comprise entre 100 mm et 600 mm. Sa dimension selon l'axe YY, ou largeur l2, est par exemple comprise entre 100 et 600 mm. Avantageusement la dimension selon l'axe ZZ, ou hauteur totale H2 de cet ensemble II, est inférieure à 100 mm, de préférence inférieure à 50 mm, et encore plus préférentiellement inférieure à 10 mm. Ces dimensions L2, l2 et H2 sont visibles sur la figure 12.

Selon une caractéristique tout particulièrement avantageuse de l'invention, la cuve 60 occupe une majeure partie de la surface totale du caisson. Par conséquent, cette cuve est apte à recevoir un volume substantiel de liquide, tout en présentant une hauteur limitée, ce qui permet de réduire l'épaisseur globale du dispositif de l'invention. A titre indicatif, le rapport (S60 / S151) entre la surface S60 de la cuve 60 et la surface totale S151 du caisson 151 est supérieur à 5, notamment supérieur à 10.

La mise en oeuvre du dispositif de nébulisation et de l'ensemble de nébulisation conformes à l'invention, tels que décrits ci-dessus, va maintenant être explicitée dans ce qui suit.

On remplit tout d'abord le volume intérieur du dispositif I au moyen du liquide L à nébuliser, au travers successivement du volet 302 et de la trappe 121. Ce liquide s'écoule alors dans la chambre de nébulisation, au travers du passage 11. De manière avantageuse, le fond de la zone d'accumulation 60A et le fond de la chambre de nébulisation 20 sont situés à la même altitude. Cette configuration est avantageuse, car elle assure l'écoulement de la totalité du liquide dans la chambre. Avantageusement la hauteur maximale de liquide dans la chambre 20, notée Lmax, est inférieure à 20 mm, de préférence inférieure à 18 mm, et encore plus préférentiellement inférieure à 15 mm.

L'élément piézo-électrique 30 est disposé de manière à ce que sa surface active 30' soit recouverte au moins partiellement d'une épaisseur de liquide suffisante pour assurer son refroidissement. La surface active précitée 30' est celle en regard de l'organe de réflexion acoustique 50, comme montré sur la figure 8. De préférence cette surface active est sensiblement verticale, à savoir perpendiculaire à la surface SL du liquide L. A titre de variante non illustrée, on peut prévoir d'orienter cette surface avec un léger angle.

Les ondes acoustiques émises par la surface active 30' de l'élément piézo-électrique sont dirigées vers l'interface entre le liquide et l'air, par l'intermédiaire de la surface de réflexion acoustique 51. La distance entre ces surfaces 30' et 51 est suffisamment faible, de manière à éviter une trop grande divergence du faisceau d'ondes acoustiques. Typiquement un élément piézo-électrique utilisable dans le dispositif selon l'invention présente un champ proche (i.e. une zone à partir de la surface émettrice où le faisceau d'ondes est approximativement parallèle) d'environ 10 mm à 30 mm. On peut par exemple utiliser un élément piézo-électrique d'un diamètre de 10 mm, ce qui permet de réduire la hauteur Lmax à moins de 12 mm.

La surface de réflexion acoustique 51 permet la focalisation des ondes acoustiques sur une zone focale, de préférence un point focal PF, qui se situe au-dessous de la surface Lmax du liquide, à une profondeur hF de l'ordre de quelques millimètres (voir figure 8) Avantageusement la valeur de cette profondeur hF est comprise entre 0 et 5 mm. Il faut éviter qu'il se situe au-dessus de la surface du liquide, car cela entraine une baisse significative du rendement de brouillard. Cependant, le dispositif conforme à l'invention peut fonctionner dans cette configuration non optimale. On préfère que le point focal se situe à une profondeur d'au moins 0,5 mm, et encore plus préférentielle d'au moins 1 mm ; cela donne un bon rendement tout en assurant une bonne stabilité des conditions opératoires. Une profondeur compris entre 1 mm et 3 mm est globalement optimale.

Comme le montre la figure 8, la distance focale DF entre le point focal PF et la surface émettrice 30' de l'élément piézo-électrique 30 est avantageusement comprise entre 8 à 28 mm. La distance DE entre cette surface émettrice 30' et la surface de réflexion acoustique 51, mesurée au niveau de la surface du liquide, est avantageusement comprise entre 10 mm et 30 mm (sachant que DE est supérieure à DF). Elle se situe typiquement dans le champ proche dudit élément piézo-électrique. La fréquence est avantageusement entre 1 MHz et 5 MHz, par exemple 3 MHz. La surface de réflexion 51 doit avoir un fort contraste d'impédance ce qui permet de réaliser un miroir acoustique très efficace (i.e. un miroir réfléchissant quasi la totalité de l'énergie acoustique) ; elle est réalisée de préférence en métal.

Il se crée à partir de la surface du liquide un jet de gouttelettes J appelé ici « jet primaire de nébulisation ». Comme le montre notamment la figure 8, ce jet présente une forme à peu près parabolique, globalement parallèle à celle du déflecteur 43. Ce dernier assure donc une double fonction de guidage et de protection du jet J. Par ailleurs, la surface inférieure de ce déflecteur 43 permet d'éliminer au moins une partie des grosses gouttelettes, initialement présentes dans le jet J.

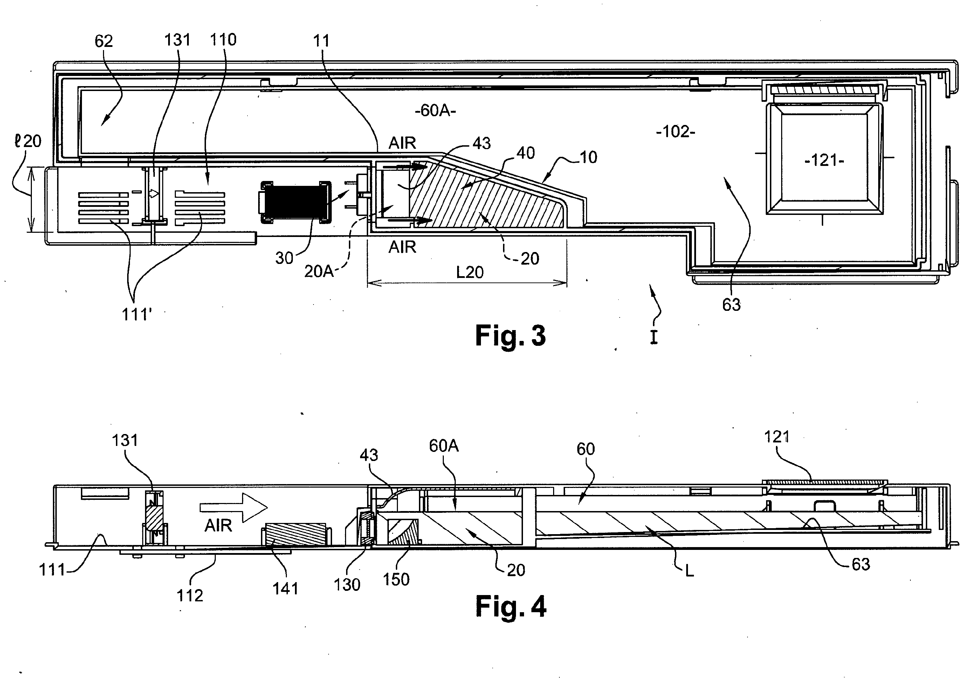

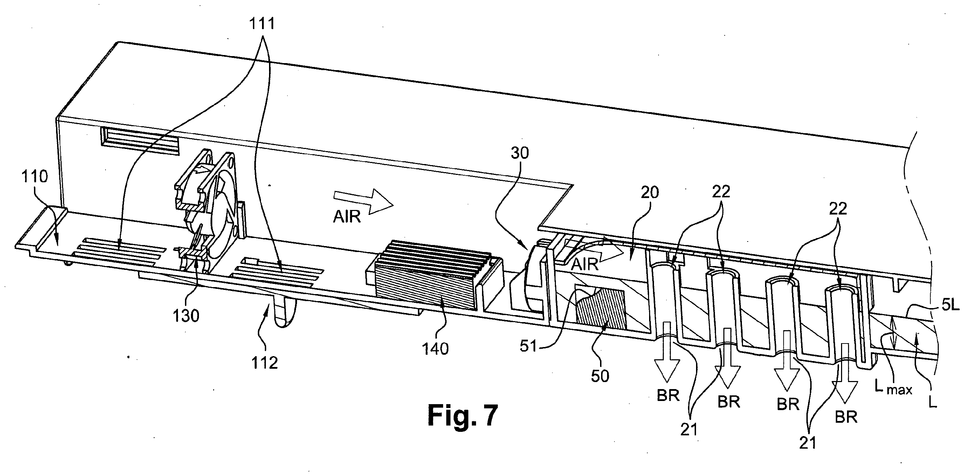

Selon une première variante de mise en oeuvre, de façon sensiblement simultanée à la création du jet J, on active le ventilateur 131 de manière à créer un flux d'air matérialisé. par la référence AIR sur les figures 4, 7, 8 et 9. Ce flux d'air s'écoule successivement au travers de l'encoche 82 puis des admissions 44, avant d'entrer en contact avec le jet J. Cette mise en contact conduit à la création d'un brouillard, noté BR sur les figures 7 et 8, lequel s'écoule dans la chambre de nébulisation puis est distribué hors du dispositif, via les orifices de sortie 21.

Cependant, selon une deuxième variante avantageuse de mise en oeuvre, l'utilisation d'un ventilateur est optionnelle. En effet, le flux d'air qui s'écoule dans la chambre 20 peut aussi être généré par simple aspiration, l'air situé au-dessous du déflecteur 43 étant entraîné vers les orifices de diffusion sous l'effet du jet de nébulisation proprement dit. Dans ce cas, on parle d'un flux d'air « naturel », dont la vitesse est en règle générale plus faible que celle d'un flux d'air généré au moyen d'un ventilateur.

Lors de la mise en oeuvre de cette deuxième variante, l'énergie ultra-sonique générée par l'élément 30 se transforme, pour partie, en énergie mécanique d'entraînement des gouttes de brouillard. Afin de s'assurer que sensiblement toutes ces gouttes soient diffusées hors du dispositif, il est avantageux d'affecter des plages de valeurs prédéfinies à certaines dimensions caractéristiques du dispositif, à savoir :

    i) on note d21 la section de chaque orifice 21, typiquement son diamètre dans le cas préféré où cet orifice est circulaire. Cette section d21 est comprise entre 2 et 50 millimètres, de préférence entre 3 et 15 mm, encore de préférence entre 4 et 10 mm, notamment voisine de 6 millimètres.

    ii) sur la figure 8 on note 23 le conduit de diffusion des gouttes, reliant l'encoche d'admission 82 et les canaux de diffusion 22. Sur cette figure, on note en outre H23 la hauteur de ce conduit, à savoir la différence d'altitude entre le niveau maximal de liquide (qui correspond à la hauteur du passage 11) et la paroi supérieure de la chambre 20. Cette hauteur H23 est comprise entre 2 et 100 mm, de préférence entre 4 et 20 mm, de préférence entre 8 et 12 mm, notamment voisine de 12 millimètres. Cette plage de valeurs est également favorable, en vue d'un bon écou-

13

lement de l'air dans la chambre 20.

iii) on note S82 la surface de l'encoche 82, à savoir la surface d'admission d'air dans la chambre, ainsi que S21 la surface de diffusion des gouttes hors de la chambre, cette surface S21 étant égale à la somme des surfaces des différents orifices de diffusion 21. Le rapport (S82/S21) est supérieur à 1, notamment supérieur à 3, en particulier à 10. Cela permet un écoulement satisfaisant de l'air dans la chambre, de sorte qu'il peut entraîner de manière efficace les gouttes en direction des orifices de diffusion.

iv) sur la figure 3 on note respectivement L20 et l20 la plus grande longueur et la plus grande largeur de la chambre 20. La longueur L20 est comprise entre 10 et 500 mm, notamment entre 30 et 160 mm, de préférence entre 30 et 100 mm, notamment voisine de 90 millimètres, alors que la largeur l20 est comprise entre 5 et 500 mm, notamment entre16 et 60 mm, de préférence entre 16 et 30 mm, notamment voisine de 30 millimètres.

v) sur la figure 9 on note D22 la plus petite distance, selon l'axe horizontal, entre le point focal PF et le débouché amont du canal de diffusion 22, adjacent à ce point focal. Cette distance D22 est comprise entre 2 et 300 mm, de préférence entre 5 et 60 mm, notamment entre 10 et 30 mm, en particulier voisine de 20 mm. Une telle gamme de distance permet d'éviter que les gouttes ne retombent par gravité, avant d'atteindre les canaux 22.

Parmi les plages de valeurs i) à iv) ci-dessus, celles i), ii) et v) sont tout particulièrement préférées.

En référence à nouveau à la figure 3, la présence du déflecteur 43 oblige l'air, provenant de l'extérieur du caisson 151 au travers de l'encoche 82, à s'écouler au-dessus de ce déflecteur. Dans ces conditions, cet air n'entre pas en contact avec le jet, avant son passage au travers des admissions 44 selon les flèches AIR de cette figure 3. Ce déflecteur 43 délimite donc une zone amont 20' de la chambre de nébulisation 20 (voir figures 3 et 9), dans laquelle l'air et le jet ne sont pas en contact.

Néanmoins, la présence du déflecteur 43 est optionnelle. A cet égard, les figures 14 à 16 montrent une variante de réalisation de l'invention, dans lequel le dispositif de nébulisation est dépourvu d'un tel déflecteur. Sur ces figures 14 à 16, les éléments mécaniques et les écoulements de fluide, analogues à ceux des figures 1 à 13, y sont affectés des mêmes numéros de référence. Cette variante de réalisation de l'invention présente des avantages spécifiques, notamment liés à la simplicité constructive.

En service, la hauteur de liquide dans la chambre 20 doit être suffisante, de manière à ce que ce liquide recouvre au moins partiellement la surface active de l'élément piézo-électrique 30. A cet effet, on peut équiper cette chambre 20 au moyen d'un capteur, de tout type connu en soi, propre à détecter cette hauteur de liquide. Lorsque ce capteur détecte un niveau de liquide anormalement bas, il émet une alerte afin que du liquide soit rajouté dans la cuve et/ou que le dispositif soit arrêté.

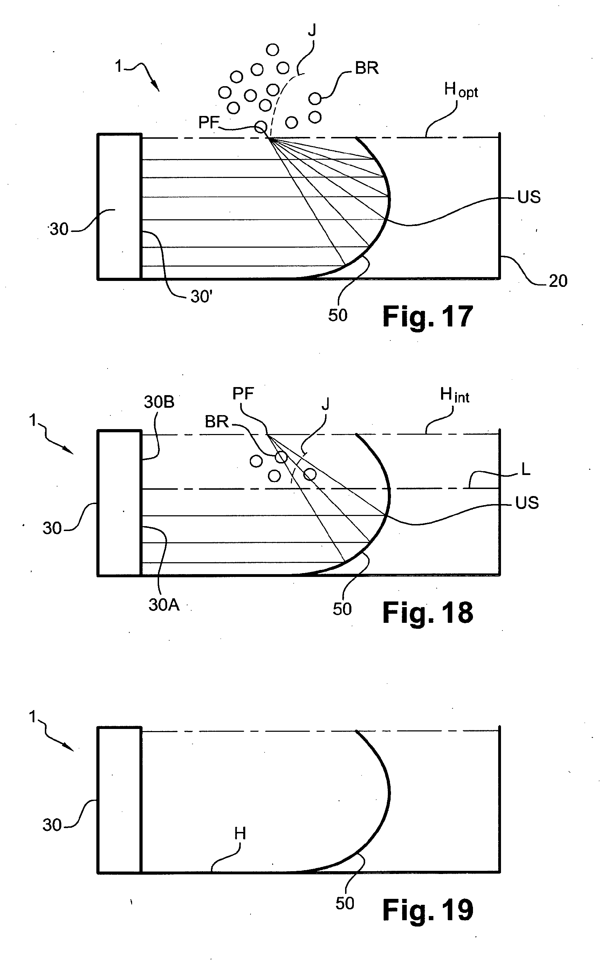

A titre de variante, illustrée aux figures 17 à 24, le dispositif de l'invention est dépourvu d'un tel capteur de niveau de liquide. Dans cette optique, ce dispositif comprend alors des moyens de mesure aptes à mesurer un paramètre représentatif du courant consommé par l'élément piézoélectrique 30, ainsi que des moyens d'alerte, propres à être activés en réponse auxdits moyens de mesure, lorsque la valeur instantanée dudit paramètre représentatif se situe en dehors d'une plage prédéterminée. Ces différents moyens, ainsi que leur mise en oeuvre, vont être décrits plus en détail ci-après.

La figure 17 montre le dispositif selon l'invention en situation de fonctionnement normal, c'est-à-dire avec un niveau de liquide dit approprié ou optimal H**opt.** Cette figure illustre la chambre 20, l'élément piézoélectrique 30, le concentrateur acoustique 50 et son point focal PF, ainsi que les ondes d'ultrasons US émises en direction de ce concentrateur acoustique. La fréquence des ultrasons utilisés dans le cadre de la présente invention se situe avantageusement entre 1,3 MHz et 3 MHz, elle peut être par exemple de 1,68 MHz.

En - fonctionnement normal du dispositif, la surface active 30' de l'élément piézoélectrique est entièrement recouverte de liquide et les ultrasons sont émis dans le liquide où ils impactent contre la surface du concentrateur acoustique. Ce dernier est conçu de manière, et le niveau de liquide est réglé de manière, à ce que le point focal des ultrasons se situe légèrement au-dessous du niveau de liquide **Hopt.** Cela assure un jet de nébulisation stable et une génération maximale de brouillard. Dans le cas de la figure 17, le fonctionnement du système est optimal. La consommation de courant de l'élément piézoélectrique est stable et varie de manière linéaire en fonction de la tension appliquée. Dans un cas fonctionnel donné ici à titre d'exemple, la tension appliquée à la carte d'excitation est de 12 volts (V), le courant nécessaire correspond à 400 milliampères (mA).

Au fur et à mesure de l'utilisation du dispositif de l'invention I, le niveau de liquide a tendance à baisser dans la cuve 60, jusqu'à atteindre le niveau de liquide dans la chambre de nébulisation 20. Puis, ce niveau s'abaisse à la fois dans la cuve et dans la chambre, de sorte que la surface de l'élément piézo-électrique 30 n'est plus entièrement recouverte par le liquide. Sur la figure 18, qui illustre cette configuration, on retrouve un niveau de liquide **Hint,** dit intermédiaire, qui est anormalement bas : le liquide ne recouvre plus la totalité de la surface active 30' de l'élément piézoélectrique. On note 30A la partie immergée et 30B la partie non immergée de cette surface active 30'. Cela a deux conséquences : tout d'abord, sachant que le point focal des ondes acoustiques se situe maintenant au-dessus du niveau de liquide intermédiaire **Hint,** les ondes génèrent un jet de liquide, mais peu de brouillard. De plus, compte tenu du fait que l'impédance acoustique de l'air est très supérieure à celle du liquide, la partie non immergée 30B de la surface active n'émet qu'une partie négligeable de la puissance électrique absorbée sous la forme d'ultrasons : le reste est réfléchi sur la surface de la partie non immergée et dissipé en chaleur.

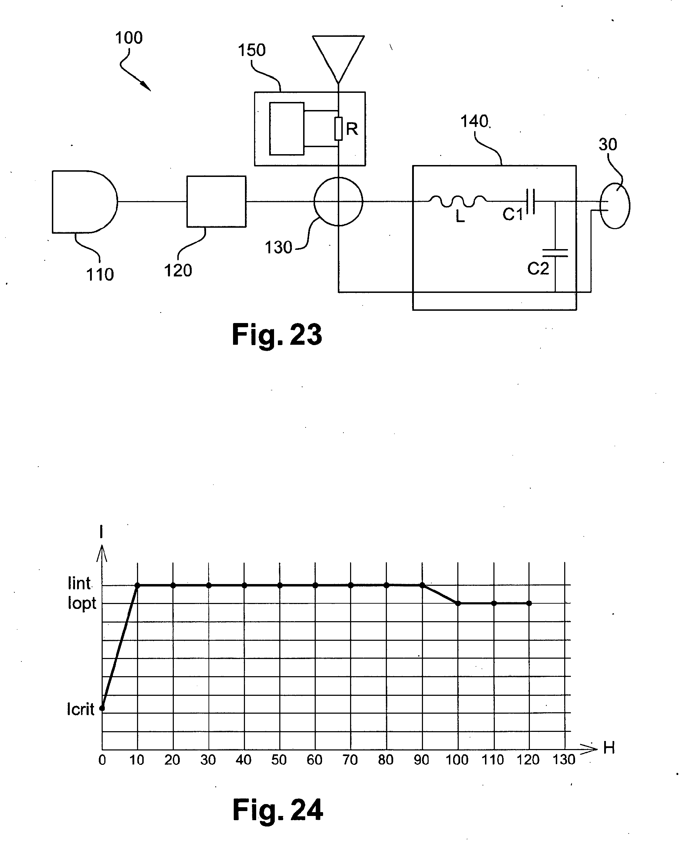

Les inventeurs ont observé que cet échauffement modifie la consommation électrique de l'élément piézoélectrique, comme cela sera détaillé en référence à la figure 24. Plus précisément, cet échauffement modifie le courant absorbé ; cette différence s'élève à quelques pourcents, mais elle est suffisante pour être détectée.

De manière typique, dans un système de nébulisation à excitation piézoélectrique, l'élément piézoélectrique est alimenté par des trains d'impulsions à tension fixe, ces impulsions étant proches de la fréquence de résonance de l'élément piézoélectrique. Lorsque l'on mesure le courant absorbé par l'élément piézoélectrique, on constate que ce courant augmente avec la température. A titre d'exemple, dans un système de nébulisation à excitation piézoélectrique, on a alimenté l'élément piézoélectrique avec une tension de 12 volts et le courant absorbé était de 400 mA en fonctionnement normal ; ce courant est de 440 mA lorsqu'une partie de la surface active de l'élément piézoélectrique n'est pas immergée.

De manière surprenante, les inventeurs ont observé que lorsque la partie non immergée de la surface active de l'élément piézoélectrique augmente, le courant absorbé diminue et passe à une valeur proche de zéro en l'absence totale de liquide (figure 19). L'élément piézoélectrique ne peut émettre dans l'air comme dans le liquide, son impédance est donc limitée et sa consommation de courant est bien inférieure à celle **Iopt** en régime optimal ainsi qu'à celle **Iint** en régime intermédiaire.

La figure 24 récapitule la variation du courant consommé 1 en fonction de la hauteur H de liquide dans la cuve. Plus précisément, le pourcentage de la hauteur de la surface active, recouverte par le liquide, est porté en abscisses. La valeur 0 correspond à une cuve vide (figure 19), la valeur 100 correspond au liquide recouvrant l'intégralité de la surface active (figure 17), la valeur 50 correspond au liquide recouvrant la moitié de la hauteur de la surface active (figure 18).

Lorsque le liquide recouvre toute la hauteur de la surface, le courant consommé présente une valeur dite optimale **Iopt,** que l'on retrouve également lorsque le liquide est présent en excès (partie droite de la courbe correspondant aux valeurs 110 et 120). Quand le niveau de liquide diminue, la valeur du courant consommé augmente légèrement, depuis la valeur optimale **Iopt** ci-dessus jusqu'à une valeur dite intermédiaire **Iint.** Cette valeur de courant consommé est alors sensiblement constante au fur et à mesure que le niveau de liquide baisse, jusqu'à descendre sensiblement jusqu'à une valeur dite critique **Icrit** correspondant à une cuve vide de liquide.

Il existe donc trois valeurs caractéristiques de courant consommé en fonction du niveau d'eau, qui correspondent à trois états du dispositif : optimal quand le niveau de liquide est satisfaisant, intermédiaire quand le niveau de liquide est insuffisant mais que l'intégrité de l'élément piézoélectrique n'est pas remise en cause, et enfin critique quand il n'y a plus de liquide dans la cuve. Typiquement, **Iint** est légèrement supérieure à **Iopt,** d'environ 10 à 20%, alors que **Icrit** est très inférieure à **Iopt.**

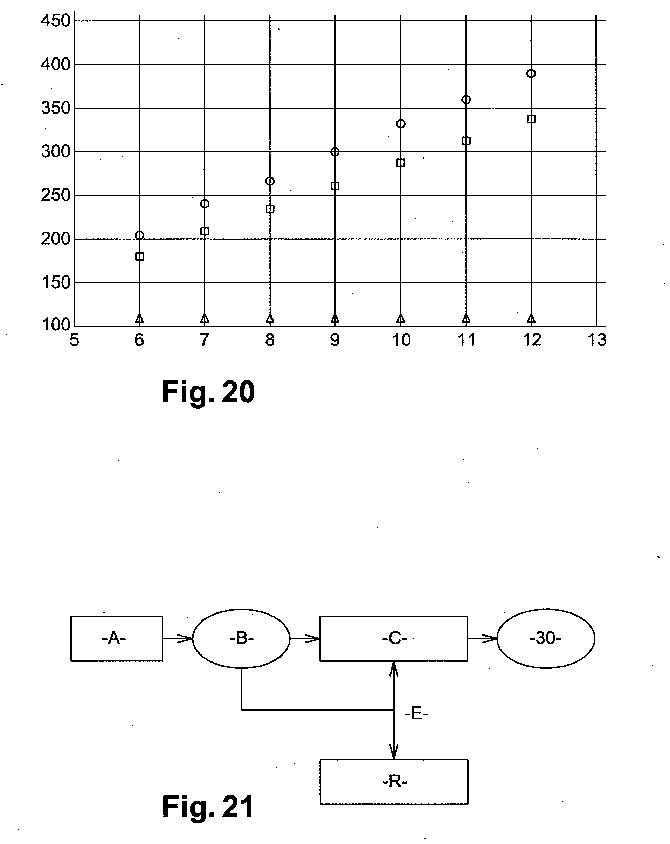

La figure 20 représente le diagramme de réponse en consommation de courant par l'élément piézoélectrique selon les modes de fonctionnement décris ci-dessus. Chacune des courbes comprend plusieurs échantillons de valeurs de courant consommé (en ordonnées) en fonction de différentes tensions appliquées à l'élément piézoélectrique (en abscisses). Chaque courbe représente un mode de fonctionnement présenté comme suit :

- La courbe constituée de carrés correspond à un fonctionnement optimal de l'élément piézoélectrique. Ce fonctionnement optimal correspond à la figure 17 quand le système comprend la hauteur définie ci-dessus **Hopt** de liquide recouvrant entièrement l'élément piézoélectrique.

- La courbe constituée de cercles correspond à un fonctionnement intermédiaire de l'élément piézoélectrique. Ce fonctionnement intermédiaire correspond à la figure 18 quand le système comprend la hauteur **Hint** de liquide définie ci-dessus.

- La courbe constituée de triangles correspond à un fonctionnement à vide comme précédemment décrit en référence à la figure 19.

Chacune des courbes, représentant un mode de fonctionnement, montre la linéarité entre la tension appliquée aux bornes de l'élément piézoélectrique 30 et le courant consommé. Il s'ensuit que cette variation de la consommation de courant en fonction du niveau de liquide ne peut être exploitée directement pour détecter le niveau de liquide : il faut effectuer une calibration.

La figure 21 montre de manière schématique un procédé de régulation qui se base sur la mesure du courant et de la tension de l'élément piézoélectrique pour détecter la présence ou l'absence de l'eau et de la nébulisation.

Dans le cas d'un circuit électronique à forte puissance où un générateur de signal alimente l'élément piézoélectrique à une fréquence fixe on constate que le courant au niveau de l'alimentation du circuit varie en fonction de la fraction surfacique de la surface active de l'élément piézoélectrique qui est recouverte d'eau.

Dans un mode de réalisation typiquement, l'élément piézoélectrique est alimenté en courant direct (par exemple à une tension de 24 V DC), modulé par la fréquence de résonance de l'élément piézoélectrique. Dans un tel mode de fonctionnement normal, la surface active de l'élément piézoélectrique est totalement recouverte de liquide ; la nébulisation fonctionne, et la consommation de courant est stable (typiquement à environ 2,3 A pour un diamètre de la surface active compris entre environ 10mm et environ 20mm).

Dans le cas où la surface active de l'élément piézoélectrique est seulement partiellement recouvert de liquide, les inventeurs ont observé une chute de courant qui est significative et extrêmement rapide (en moins de 100 ms). Cette chute peut être de l'ordre de 30 à 40% de la valeur nominale du courant absorbé par l'élément piézoélectrique totalement recouvert de liquide (dans l'exemple environ 2,3 A). Ces indicateurs permettent de réagir rapidement afin de couper l'alimentation de l'élément piézoélectrique ou de diminuer la puissance électrique fournie par ladite alimentation à l'élément piézoélectrique, et/ou pour déclencher un nouveau remplissage d'eau. Ainsi il est possible de retourner vers un mode de fonctionnement dans lequel la surface active est complètement immergée.

Cet indicateur, qui est relié à la chute du courant constaté, peut être corrélé avec une mesure temporelle afin d'estimer le débit de nébulisation du système et de déclencher éventuellement des alarmes en cas de problème dû au remplissage ou au bon fonctionnement de l'élément piézoélectrique.

Nous décrivons ici à titre d'illustration un tel procédé de régulation. Les trois premières étapes sont typiquement mises en oeuvre lors de la première utilisation du dispositif. En effet, les caractéristiques intrinsèques aux différents éléments piézoélectriques peuvent varier d'un dispositif à l'autre. Ces étapes permettent d'accéder à la connaissance de ces caractéristiques.

1<sup>er</sup> étape : Calibration des paramètres en présence optimale du liquide.

On fait varier la tension A d'une valeur de service minimale à une valeur de service maximale (par exemple de 6 V à 12 V), on mesure et on enregistre la valeur du courant B pour chaque tension. Ces valeurs seront utilisées comme référence pour détecter la variation du courant en cours de la nébulisation et indiquer aux utilisateurs la présence ou l'absence de l'eau.

2<sup>ième</sup> étape : Calibration des paramètres en présence intermédiaire du liquide.

On fait varier la tension A entre les valeurs de service minimale et maximale ci-dessus, on mesure et on enregistre la valeur du courant B pour chaque tension. Ces valeurs seront utilisées comme référence pour détecter la variation du courant en cours de la nébulisation et indiquer aux utilisateurs la présence ou l'absence de l'eau.

3<sup>ième</sup> étape : Calibration des paramètres en absence du liquide.

On fait varier la tension A entre les valeurs de service minimale et maximale ci-dessus, on mesure et on enregistre la valeur du courant B pour chaque tension. Ces valeurs seront utilisées comme référence pour détecter la variation du courant en cours de la nébulisation et indiquer aux utilisateurs la présence ou l'absence de l'eau.

4<sup>ième</sup> étape : Configuration du système

Les différentes valeurs de courant consommé pour chaque tension observée sont enregistrées dans la commande de pilotage du piézoélectrique C. Ainsi, pour chaque valeur de tension à laquelle peut être mis en service le dispositif, on enregistre notamment les valeurs **Iopt., Iint** et **Icrit** telles que définies ci-dessus.

Dans l'exemple indiqué ci-dessus (circuit auto-oscillant), lorsqu'il est alimenté à 12 Volts, la consommation **Iopt.** de l'élément piézoélectrique est de 400 mA pour un fonctionnement normal. Cette consommation monte à une valeur **Iint** voisine de 440 mA en fonctionnement avec niveau de liquide bas, puis cette consommation de courant tombe à une valeur **Icrit** voisine de 110 mA en l'absence de liquide comme montré sur la figure 3

5<sup>ième</sup> étape : Fonctionnement normal.

On mesure la valeur du courant consommé par l'élément piézoélectrique. Cette mesure peut être continue ou, en variante, on peut réaliser des mesures régulières à une fréquence appropriée. Tant que la valeur instantanée de ce courant 1 n'atteint pas la valeur seuil telle que montrée à la figure 24, il n'y a pas de rétroaction. En d'autres termes, il n'est pas nécessaire de rajouter du liquide dans la cuve.

6$^{ième}$ étape : Alimentation en eau

Le système de régulation C permet de commander l'électrovanne E assurant le remplissage du bac R lorsque la consommation de courant du piézoélectrique 30 devient excessive. De façon plus précise, lorsque la valeur instantanée mesurée de courant consommé atteint la valeur seuil **Iint** définie ci-dessus, le système de régulation déclenche une alerte qui est dirigée vers l'électrovanne E. Cette dernière commande alors l'arrivée de liquide supplémentaire dans la cuve, ce qui a pour effet d'abaisser la valeur de courant consommé. Le dispositif retrouve une configuration optimale, telle que définie ci-dessus, de sorte que l'arrivée d'eau est alors stoppée.

A titre de variante, l'alerte déclenchée par le système de régulation peut ne pas être transmise à une électrovanne, mais à un organe de signalisation. Ce dernier émet alors un signal perceptible par l'utilisateur, notamment de type visuel et/ou sonore. L'ajout de liquide dans la cuve est, dans ce cas, assuré directement par l'utilisateur et non pas par un élément mécanique du dispositif.

7$^{ième}$ étape: Notification de manque d'eau et arrêt

Le système de régulation C est apte à arrêter le piézoélectrique pour limiter la casse de ce dernier lorsqu'il détecte une consommation basse du courant par l'élément piézoélectrique 30.

De façon plus précise, lorsque la valeur instantanée mesurée de courant consommé atteint la valeur seuil **Icrit** définie ci-dessus, le système de régulation déclenche une alerte qui est dirigée vers des moyens de coupure automatique de l'élément piézoélectrique. Ceci permet de garantir l'intégrité mécanique de cet élément, qui serait mise en péril si cette situation d'absence d'eau venait à se prolonger.

A titre de variante, l'alerte déclenchée par le système de régulation peut ne pas être transmise à des moyens de coupure, mais à un organe de signalisation. Ce dernier émet alors un signal perceptible par l'utilisateur, notamment de type visuel et/ou sonore. L'arrêt de l'élément piézoélectrique est, dans ce cas, assuré directement par l'utilisateur et non pas par un élément mécanique du dispositif.

Comme décrit ci-dessus, aux sixième et septième étapes, à la fois le besoin d'alimentation en eau et la nécessité de couper l'élément piézoélectrique peuvent être signifiés directement à l'utilisateur. Dans le cas, on prévoit avantageusement deux signaux différents, respectivement pour le besoin en eau et l'arrêt de l'élément piézoélectrique. On peut utiliser deux organes de signalisation différents ou bien, à titre de variante, un unique organe apte à émettre deux signaux différents.

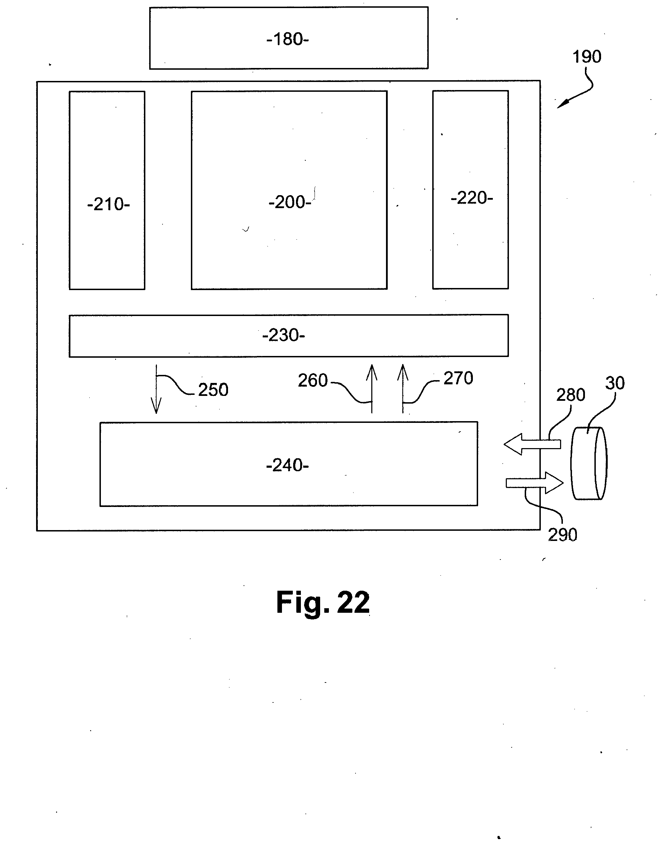

La figure 22 met en oeuvre un ensemble électronique. Le pilotage de l'ensemble est réalisé par une carte 190 dont l'alimentation se fait de manière déportée par un module 180 d'alimentation. La tension continue fournie peut être comprise entre 6 et 40 Volts.

Cette carte est construite autour du microcontrôleur 200 permettant la gestion applicative des étapes énoncées ci-dessus. Ce microcontrôleur 200 gère aussi la connectivité des modules d'entrée/sortie.

Cette carte comprend un module 210 d'entrée analogique tout ou rien (TOR) et un module sortie 220. Ces ensembles permettent de commander l'alimentation en eau du réceptacle en cas de niveau intermédiaire ou vide ou de commander le signal d'information permettant de prévenir l'usager de la nécessiter de remplir le réservoir alimentant le réceptacle.

Un sous-ensemble 230 est présent pour constituer la commande piézoélectrique, celle-ci permet de définir la fréquence d'excitation, le voltage, le rapport cyclique. Ce module permet aussi d'obtenir les informations sur le courant consommé 260 ainsi que la température 270 du piézoélectrique 20.

Le dernier module 240 de cette carte 190 est l'élément de contrôle et de commande du piézoélectrique. Ce module est l'interface permettant l'envoi du signal de tension électrique permettant d'exciter le piézoélectrique 20 et en retour d'obtenir la température et/ou la tension dudit élément 20.

Ce mode de réalisation avantageux de l'invention, relatif à l'absence de capteur de niveau d'eau, est illustré ci-dessous par un exemple qui cependant n'en limite pas la portée. Cet exemple porte sur une mise en oeuvre du module de commande de puissance du piézoélectrique.

Pour réaliser le procédé de régulation, l'homme du métier a besoin de comprendre l'aspect technique lié au module 240 de la figure 22.

Dans la figure 23, la carte 100 est construite autour du microcontrôleur, qui a pour rôle de gérer le générateur de signal et par la suite la commande de piézoélectrique. La carte 100 dispose également d'un régulateur à découpage 12V pour la commande du transistor via le driver 120, et d'un régulateur linéaire 5V pour l'adaptation du signal de commande en entrée.

Le principe du driver 120 est de pouvoir fournir pendant un court instant le courant important nécessaire à la commutation du transistor 130 en hautes fréquences. Lors des fronts du signal de commande, le courant d'appel de la commande du transistor 130 est très important, et fournir suffisamment de courant permet une commutation rapide, limitant les états transitoires provoquant un échauffement du transistor 130.

Pour pouvoir fournir rapidement un courant important, le driver de transistor 120 utilise plusieurs condensateurs en parallèle en amont du composant. La tension de commande du transistor est fixée à 12V, minimisant ainsi l'effet de sa caractéristique Ron et donc l'échauffement du composant.

La fréquence d'excitation du piézoélectrique 30 est générée par le composant 110, qui produit un signal carré de fréquence programmable (par défaut 1.7 MHz). Le circuit d'adaptation d'impédance 140 du piézoélectrique 30 est constitué d'une bobine et d'un condensateur en série avec un condensateur en parallèle sur la sortie. Ce composant est piloté par le micro-processeur.

La relation entre les valeurs de ces composants (L et C) est un facteur très important dans le comportement d'un circuit LC et sont choisies en tenant compte de l'impédance de l'élément piézoélectrique (dans l'eau) et de sa fréquence de résonance, et qui fixera par la suite sa consommation de courant moyenne.

Le résultant est un signal sinusoïdal stable et constant en fonction du temps aux bornes de l'élément piézoélectrique adapté à un fonctionnement optimal dans l'eau. (Les valeurs de tensions/courant crête à crête ne doivent pas dépasser la limite max de l'élément piézoélectrique).

$$f0 = \frac{1}{2\pi\sqrt{LC}}$$

f0 : la fréquence de résonance.
L : la valeur de la bobine.
C : la valeur du condensateur.

A titre d'exemple non limitatif, avec les valeurs suivantes : L=5.8 μH et C=2.2 nF, on arrive à une valeur de f0 d'environ 1.4 MHz.

Pour un fonctionnement sans eau, la valeur de l'impédance de l'élément piézoélectrique va changer et introduire une désadaptation d'impédance électrique à l'ensemble du circuit et changera par la suite sa consommation de courant.

Le piézoélectrique 30 est piloté par un transistor 130, ayant un excellent rapport charge de commande et résistance à l'état passant, et un temps de réponse très rapide lui autorisant un fonctionnement à fréquence élevée (1.7 MHz), permettant d'avoir à la fois un signal de qualité et un échauffement modéré.

Pour assurer une commutation la plus rapide possible et donc limiter l'échauffement du transistor, très important pendant les phases de transition, un driver de commande 120 pouvant délivrer jusque 2 x 5A est placé en amont.

Les mesures de courant 150 sont effectuées à l'aide d'une résistance de shunt de faible valeur, entre 0.01 et 0.1 ohm suivant le courant consommé, et d'un composant de type voltmètre mesurant la différence de potentiel aux bornes de la résistance et multipliant par 10 (dix) le résultat afin d'avoir une valeur plus lisible pour le microcohtrôleur.

Le microcontrôleur par la suite va comparer les valeurs de courant prélevé afin de définir l'état de fonctionnement du piézoélectrique. Cet état permettra de valider l'étape du procédé.

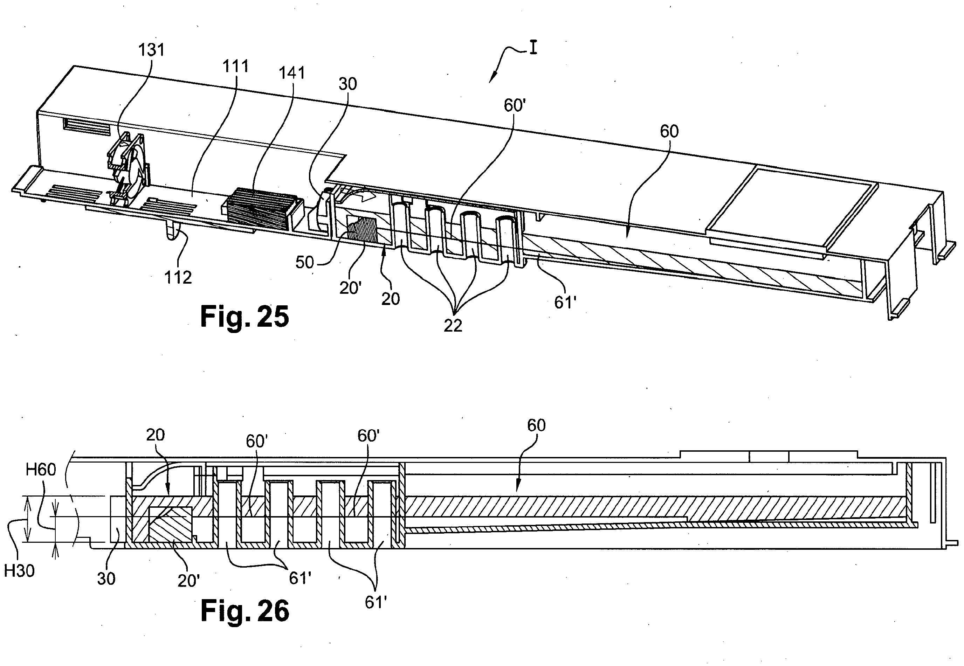

Dans les paragraphes immédiatement ci-dessus, on a décrit une mise en oeuvre du dispositif de l'invention, qui n'utilise pas de capteur de niveau de liquide. Cette mise en oeuvre est préférée, en particulier pour des raisons de coût, de fiabilité et d'encombrement. Les figures 25 et 26 illustrent une structure avantageuse du dispositif de l'invention, qui est en particulier bien adaptée pour une telle mise en oeuvre dans capteur de niveau de liquide.

Le dispositif des figures 25 et 26 diffère de celui représenté aux figures 4 et 7, notamment en ce que le fond de la cuve présente une altitude supérieure à celle du fond de la chambre. A cet effet, la cuve possède un socle 60', formée par une certaine épaisseur de matière. La face supérieure de ce socle 60' définit le fond de la cuve, lequel est noté 61' sur les figures 25 et 26. On note par ailleurs 20' le fond de la chambre de nébulisation 20, ainsi que H60 la différence d'altitudes entre ces deux fonds 20' et 60'. H60 correspond, en d'autres termes, à la hauteur du fond 60' si l'on suppose que le fond 20' se situe à une hauteur nulle. De manière typique, cette hauteur H60 est comprise entre 5 et 15 mm. Si on note H30 la hauteur de l'élément piézo-électrique, H60 est typiquement comprise entre 150% et 300% de H30.

Le mode de réalisation des figures 25 et 26 présente des avantages spécifiques. Comme on l'a vu ci-dessus, lorsque le niveau de liquide baisse dans la chambre 20, la surface non immergée de l'élément piézo-électrique 30 tend à augmenter jusqu'à ce que les moyens de commande coupent l'alimentation de cet élément 30. Or, le fond 60' se situe typiquement à une altitude correspondant au niveau de liquide dans la chambre, lors de cette coupure. Dans ces conditions, lors de l'arrêt du dispositif de l'invention, sensiblement tout le liquide initialement présent dans la cuve a été admis dans la chambre, afin d'être diffusé. Par conséquent, toute perte substantielle de liquide est évitée. De plus, il ne subsiste pratiquement plus de liquide résiduel dans la cuve au moment de cet arrêt, ce qui en facilite le nettoyage. L'hygiène globale du dispositif est également améliorée, puisque toute présence de liquide stagnant est pratiquement éliminée.

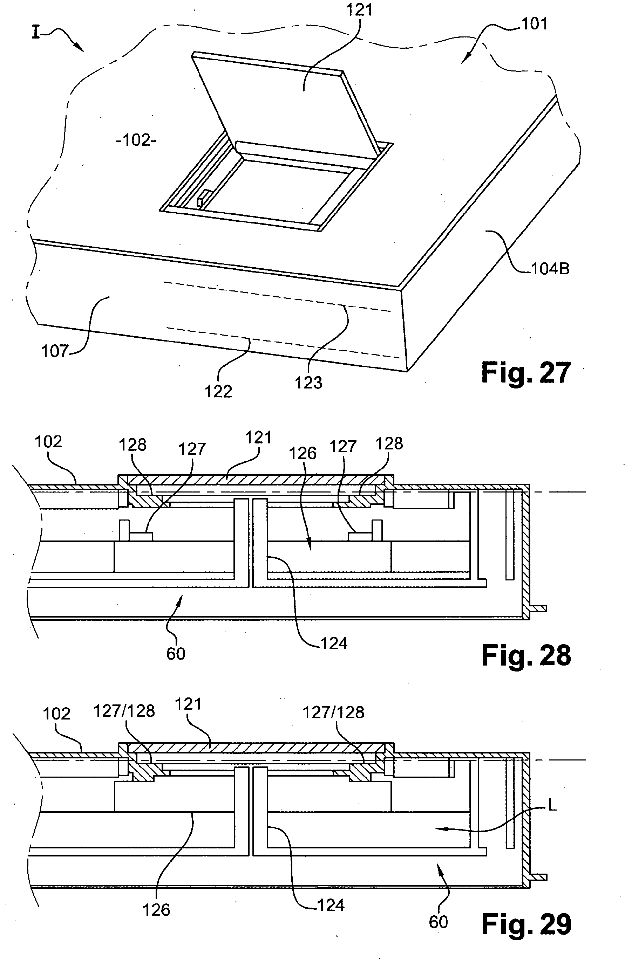

Les figures 27 à 29 illustrent différents moyens de contrôle du niveau de liquide, présent dans la cuve 60. Sur la figure 27, ces moyens de contrôle sont de type visuel. A cet effet, une des parois latérales du capot 101, en l'occurrence celle 107, est réalisée au moins partiellement en un matériau transparent. Par ailleurs, cette paroi transparente 107 est repérée au moyens de deux lignes, dont l'une 122 correspond au niveau minimal admissible dans la cuve, et dont l'autre 123 correspond au niveau maximal admissible dans la cuve. De la sorte, un utilisateur peut identifier le niveau de liquide instantané au travers de la paroi 107 et, le cas échéant, rajouter du liquide si ce niveau est inférieur à la ligne basse 122, ou proche de celle-ci. En revanche, si le niveau de liquide est proche de la ligne haute 123, l'utilisateur est informé qu'il n'est pas nécessaire de remplir la cuve à moyen terme. Enfin, si le niveau de liquide est supérieur à la ligne haute 123, l'utilisateur est informé que la cuve est en état de trop-plein. Dans ce cas le trop-plein d'eau peut être évacué par une canalisation optionnelle, en direction d'un réservoir tampon ou de vidange.

Sur les figures 28 et 29, ces moyens de contrôle du niveau de liquide sont de type mécanique. Le volume intérieur de la cuve 60 reçoit un plot vertical de guidage 124, solidaire de l'embase ou du capot. Ce plot reçoit un clapet annulaire 126, lequel est donc solidaire de ce plot en translation horizontale, mais présente un degré de liberté en translation verticale. Ce clapet est monté flottant sur le liquide, à savoir que son altitude varie avec le niveau de liquide. La face supérieure de ce clapet 126 est équipée d'un joint d'étanchéité périphérique 127, de tout type approprié, apte à prendre appui contre un rebord périphérique 128 en regard, porté par la paroi 102, lequel fait saillie au-dessous de la trappe 121.

Le clapet 126 est mobile entre deux positions fonctionnelles, à savoir tout d'abord une position de libre remplissage illustrée à la figure 28. Dans cette position, le niveau de liquide dans la cuve est inférieur à sa valeur maximale admissible. Le joint 127 est distant du rebord 128, de sorte que la trappe 120 peut être ouverte par l'utilisateur, afin que ce dernier rajoute du liquide dans la cuve 60.

La figure 29 illustre la deuxième position fonctionnelle du clapet 126, qui est une position de fermeture, ou d'interdiction de remplissage. Dans cette position le niveau de liquide, qui est bien supérieur à celui de la figure 28, est égal à la valeur maximale admissible, mentionnée ci-dessus. Dans ces conditions, le joint 127 prend appui contre le rebord 128, de sorte que la trappe 121 ne peut plus être ouverte par l'utilisateur et/ou que ce dernier ne peut plus rajouter du liquide dans la cuve 60.

Dans un mode de réalisation particulier de l'invention la cuve 60 comporte un système de désinfection non représenté, qui peut notamment être :

- soit une source de lumière ultra-violette (UV) apte à désinfecter au moins partiellement le liquide L qu'elle contient ; le fonctionnement de cette source de lumière UV peut être permanent ou intermittent. De manière préférée cette source de lumière, typiquement lampe ou LED UV, est située dans la chambre de nébulisation au plus près de la génération du brouillard ;
- soit une résistance chauffante capable de chauffer l'eau temporairement à une température suffisante pour la désinfecter, par exemple par choc thermique.

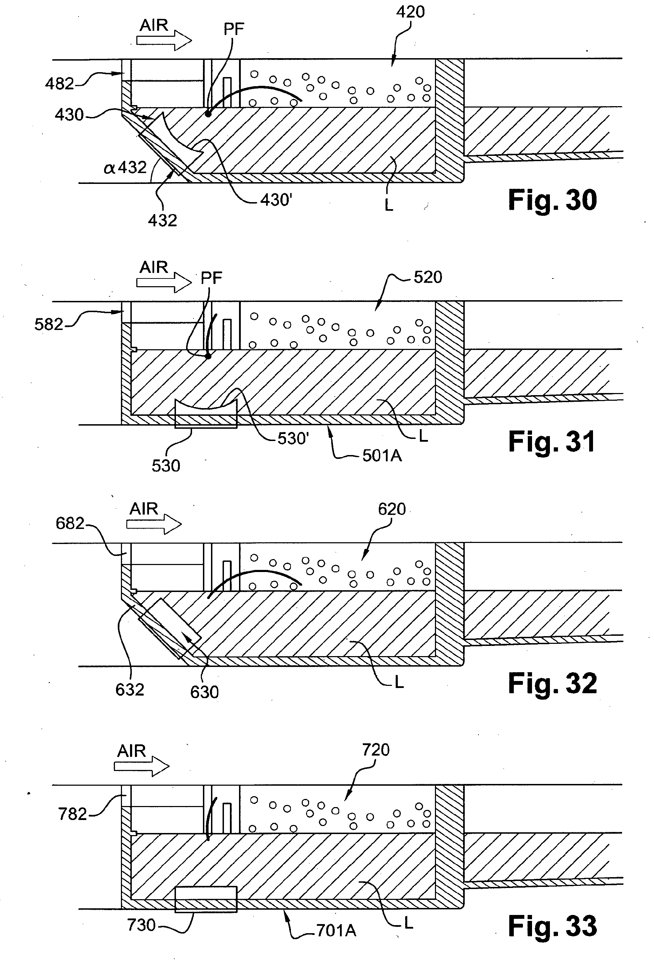

Dans les exemples décrits et représentés sur les figures 1 à 29, le dispositif de nébulisation comprend un organe de réflexion acoustique. Néanmoins, l'invention trouve également son application à un dispositif de nébulisation qui est dépourvu d'un tel organe. A cet égard, différentes variantes sont illustrées aux figures 30 à 33. Sur ces figures les éléments mécaniques, analogues à ceux des figures 1 à 29, y sont affectés des mêmes numéros de référence augmentés respectivement de 400, 500, 600 et 700.

Sur la figure 30, le fond de la chambre de nébulisation 420 présente, dans sa partie amont en référence au flux d'air, une paroi inclinée 432 dont l'angle $\alpha 432$ est typiquement compris entre 15° et 70°. Cette paroi 432 permet la fixation d'un élément piézo-électrique 430, qui est dit « focalisé ». A cet effet, de manière connue en soi, sa face active 430' présente une forme concave. Le mode de réalisation de la figure 31 diffère de celui de la figure 30, en ce que l'élément piézo-électrique 530 est fixé sur le fond 501A de la chambre 520. Les modes de réalisation des figures 30 et 31 sont avantageux, en ce qu'ils permettent de focaliser les ondes acoustiques au niveau du point PF, tout en s'affranchissant de l'utilisation d'un concentrateur. Le nombre d'éléments constitutifs est réduit, ce qui est avantageux notamment en termes économiques.

Les modes de réalisation des figures 32 et 33 sont analogues respectivement à ceux des modes de réalisation des figures 30 et 31, en ce qui concerne la fixation de l'élément piézo-électrique 630 ou 730 sur les parois de la chambre 620 ou 720. Cependant, la face active de ces éléments piézo-électriques 630 et 730 n'est pas incurvée, de sorte que les ondes acoustiques qu'ils produisent ne sont pas focalisées. Par conséquent, le dispositif des figures 32 et 33 est de type générateur de fontaine acoustique. Il est bien adapté à un environnement qui ne nécessite pas des performances de nébulisation très élevées, tout en étant particulièrement avantageux en termes de coût de fabrication et de simplicité de fonctionnement.

Les modes de réalisation des figures 32 et 33 ne comprennent pas la caractéristique v) mentionnée ci-dessus, relative au positionnement du point focal. Ces modes de réalisation incluent, de manière avantageuse, les plages de valeurs i) à iv) ci-dessus, celles i) et ii) étant tout particulièrement préférées.

Dans les exemples décrits et représentés, l'air et le jet de gouttelettes s'écoulent en service selon la même direction, c'est-à-dire à co-courant, depuis les moyens d'arrivée en direction des moyens de diffusion. A titre de variante, on peut prévoir que l'air et le jet de gouttelettes s'écoulent à contre-courant, ou encore à courants croisés.

Le dispositif selon l'invention se caractérise notamment par sa faible hauteur, inférieure à 100 millimètres, notamment à 50 millimètres, de préférence à 30 millimètres. Cela permet son implantation dans des systèmes qui n'offrent pas une hauteur significative, tels une pièce de structure ou une pièce d'habillage. A titre d'exemples non limitatifs, on citera :

- la double paroi d'une cave de maturation, par exemple pour fromages, viandes, cuirs, ou d'une vitrine réfrigérée pour le contrôle de l'humidité ;
- l'habillage supérieur d'une enceinte de réfrigération et/ou d'humidification de produits frais, de type conteneur, cuve, armoire de stockage de produits frais ou encore chambre froide ;
- l'habillage du plafond de l'habitacle d'un véhicule, notamment d'une voiture, d'un bus ou d'un avion, afin de rafraichir les passagers ;
- un faux-plafond utilisé en construction mécanique ;
- un plafond ou rayonnage de conteneur de transport.

Dans d'autres modes de réalisation on prévoit une sonde hygrométrique qui mesure le taux d'humidité dans le volume d'air conditionné par le dispositif selon l'invention ; une boucle de rétroaction permet de réguler l'intensité et/ou l'intermittence du jet de brouillard produit par le dispositif de manière à obtenir dans ledit volume d'air conditionné un taux d'humidité contrôlé, de préférence constant, et de préférence réglable par l'intermédiaire d'un organe de réglage.

Dans un autre mode de réalisation ledit liquide comporte un produit désinfectant, de manière à ce que le jet de brouillard soit apte à désinfecter au moins partiellement ledit volume d'air et possiblement les parois qui le confinent.

Dans encore un autre mode de réalisation ledit liquide comporte une fragrance ou une huile dite essentielle, ou un autre produit odorant, de manière à ce que le jet de brouillard soit apte à répandre dans ledit volume d'air une odeur spécifique.

Tous les modes de réalisation présentés dans cette description peuvent être combinés entre eux.

## Revendications

1. Dispositif de nébulisation (I) capable de générer un brouillard (BR) de gouttelettes d'un liquide à partir d'un liquide (L),

   ledit dispositif comprenant :

   - une cuve (60) de réception dudit liquide,
   - un élément piézo-électrique (30) apte à émettre des ondes acoustiques dans ledit liquide (L),
   - une chambre de nébulisation (20) comprenant

     des moyens (82) d'admission d'air dans cette chambre
     des moyens de génération dudit brouillard de gouttelettes (J)
     au moins un canal (22) de diffusion de brouillard hors dudit dispositif (1), présentant un orifice aval de diffusion (21)

   ledit dispositif comprenant en outre au moins une parmi les caractéristiques suivantes i) à iv) :

     i) la section (d21) de chaque orifice de diffusion (21) est comprise entre 2 et 50 millimètres, de préférence entre 3 et 15 millimètres, encore de préférence entre 4 et 10 millimètres, notamment voisine de 6 millimètres ;
     ii) la hauteur (H23) du conduit de diffusion des gouttes, reliant les moyens d'admission (82) et les canaux de diffusion (22), est comprise entre 2 et 100 millimètres, de préférence entre 4 et 20 millimètres, encore de préférence entre 8 et 12 millimètres, notamment voisine de 12 millimètres ;
     iii) le rapport (S82/S21), entre la surface d'admission d'air dans la chambre et la somme des surfaces des différents orifices de diffusion (21), est supérieur à 1, notamment supérieur à 3, de préférence supérieur à 10 ;
     iv) la longueur (L20) de la chambre de nébulisation (20) est comprise entre 10 et 500 millimètres, de préférence entre 30 et 160 millimètres, encore de préférence entre 30 et 100 millimètres, notamment voisine de 90 millimètres, alors que la largeur (l20) de la chambre de nébulisation (20) est comprise entre 5 et 500 millimètres, de préférence entre 16 et 60 millimètres, encore de préférence entre 16 et 30 millimètres, notamment voisine de 30 millimètres,

ledit dispositif comprenant en outre un caisson (151) sensiblement fermé, ladite cuve et ladite chambre de nébulisation étant ménagées dans ce caisson.

2. Dispositif selon la revendication 1, **caractérisé en ce que** ledit caisson est bordé par un fond (2), une paroi supérieure (102) et des parois latérales (103-109), la paroi supérieure étant plane.

3. Dispositif selon la revendication 2, **caractérisé en ce que** le fond et la paroi supérieure sont plans.

4. Dispositif selon l'une des revendications précédentes, **caractérisé en ce que** la plus grande hauteur (H1) du dispositif est inférieure est inférieure à 100 mm, de préférence inférieure à 50 mm, et encore plus préférentiellement inférieure à 10 mm.

5. Dispositif selon l'une des revendications 1 à 4, **caractérisé en ce qu'**il présente une forme globalement parallélépipédique.

6. Dispositif selon l'une des revendications précédentes, **caractérisé en ce que** ledit caisson est bordé par un fond (2), une paroi supérieure (102) et des parois latérales (103-109), ledit élément piézo-électrique (30) et les moyens (82) d'admission d'air étant prévus sur une même paroi latérale du caisson.

7. Dispositif selon l'une des revendications précédentes, **caractérisé en ce qu'**il comprend en outre un voile (10) de séparation entre la cuve et la chambre de nébulisation, ce voile présentant un passage (11), permettant l'écoulement du liquide de la cuve vers la chambre de nébulisation.

8. Dispositif selon l'une des revendications précédentes, **caractérisé en ce qu'**il comprend une embase (1) et un capot (101) apte à être fixé, notamment de manière amovible, sur cette embase, cette embase et ce capot délimitant ledit caisson.

9. Dispositif selon l'une des revendications précédentes, **caractérisé en ce que** l'élément piézo-électrique (30) est reçu de manière amovible dans une ouverture (81) ménagée dans une paroi latérale du caisson.

10. Dispositif selon l'une des revendications précédentes, **caractérisé en ce que** la hauteur maximale (Lmax) de liquide dans la chambre (20) est inférieure à 20 millimètres, notamment à 18 millimètres, de préférence à 15 millimètres.

11. Dispositif selon l'une des revendications précédentes, **caractérisé en ce que** l'air et le jet de gouttelettes s'écoulent en service selon une première direction, depuis les moyens d'arrivée en direction des moyens de diffusion, alors que le jet de gouttelettes s'écoule dans les canaux de diffusion selon une deuxième direction, différente de la première direction, la première direction étant notamment horizontale alors que la deuxième direction est notamment verticale.

12. Dispositif selon l'une des revendications précédentes, **caractérisé en ce que** le dispositif est dépourvu de ventilateur.

13. Dispositif selon l'une des revendications précédentes, **caractérisé en ce que** le fond (20') de la chambre de nébulisation (20) est située à une altitude supérieure à celle du fond (60') de la cuve (60) de réception dudit liquide.

14. Dispositif selon l'une quelconque des revendications précédentes, **caractérisé en ce qu'**il comprend en outre un déflecteur (43) du jet de brouillard (BR), lequel définit une zone dite amont (20') de la chambre de nébulisation (20), dans laquelle le déflecteur permet d'éviter le contact du jet (J) avec l'air provenant de l'extérieur du caisson (151).

15. Ensemble de nébulisation comprenant un volume intérieur bordé par des parois, dans lequel au moins une échancrure est ménagée dans au moins une paroi, cet ensemble comportant au moins un dispositif selon l'une quelconque des revendications précédentes, ce dispositif reposant sur un rebord bordant ladite échancrure, les moyens (21) de diffusion de brouillard de ce dispositif étant placés dans ladite échancrure.

**Fig. 1**

EP 4 292 480 A2

Fig.2

**Fig. 3**

**Fig. 4**

EP 4 292 480 A2

Fig. 5

Fig. 6

**Fig. 7**

EP 4 292 480 A2

**Fig. 8**

**Fig. 9**

301

302

I

121 I H1 203

L1

203

-202-

203

ℓ1

-204- II

201 205 203

**Fig. 10**

II

302

-301-

203

121

201

**Fig. 11**

XIII

H2

-II-

ℓ2

L2

**Fig. 12**

21

111'  112

111  204

205  I

**Fig. 13**

**Fig. 14**

**Fig. 15**

**Fig. 16**

**Fig. 17**

**Fig. 18**

**Fig. 19**

**Fig. 20**

**Fig. 21**

**Fig. 22**

**Fig. 23**

**Fig. 24**

Fig. 25

Fig. 26

I

121

101

-102-

104B

107

122    123

**Fig. 27**

102    128    127    121    126    127    128

60

124

**Fig. 28**

102    127/128    121    127/128

L

126    124

60

**Fig. 29**

Fig. 30

Fig. 31

Fig. 32

Fig. 33

**RÉFÉRENCES CITÉES DANS LA DESCRIPTION**

**Documents brevets cités dans la description**

- WO 2013110248 A, Nebu Tec
- WO 2012020262 A
- WO 0515822 A
- EP 2244314 A, Zobele Holding
- US 2006213503 A
- US 2005224076 A, Pari Pharma
- WO 200185240 A, Pezzopane
- FR 2929861, L'Oréal
- US 8870090 B, Aptar

- WO 2008058941 A, Telemaq
- JP 2001300375 A, Panasonic
- EP 0691162 A1
- EP 0782885 A1
- FR 2899135 A1
- FR 2921551 A1
- WO 2014023907 A1
- WO 2013034847 A1
- FR 2690510 A1